(19) Europäisches Patentamt / European Patent Office / Office européen des brevets

(11) **EP 4 004 866 B1**

(12) **FASCICULE DE BREVET EUROPEEN**

(45) Date de publication et mention de la délivrance du brevet:
**05.08.2026 Bulletin 2026/32**

(21) Numéro de dépôt: **20728805.1**

(22) Date de dépôt: **03.06.2020**

(51) Classification Internationale des Brevets (IPC):
**G06T 7/00** *(2017.01)*   **G06T 7/136** *(2017.01)*
**G06T 7/11** *(2017.01)*

(52) Classification Coopérative des Brevets (CPC):
**G06T 7/0012; G06T 7/11; G06T 7/136;**
G06T 2207/10088; G06T 2207/30061

(86) Numéro de dépôt international:
**PCT/EP2020/065380**

(87) Numéro de publication internationale:
**WO 2021/018439 (04.02.2021 Gazette 2021/05)**

(54) **PROCÉDÉ DE GÉNÉRATION D'UN BIOMARQUEUR, SYSTÈME**

VERFAHREN ZUR ERZEUGUNG EINES BIOMARKERS, SYSTEM

METHOD FOR GENERATING A BIOMARKER, SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2019 FR 1908734**

(43) Date de publication de la demande:
**01.06.2022 Bulletin 2022/22**

(73) Titulaires:
- **UNIVERSITE DE BORDEAUX**
  **33000 Bordeaux (FR)**
- **Centre Hospitalier Universitaire de Bordeaux**
  **33404 Talence Cedex (FR)**
- **INSTITUT NATIONAL DE LA SANTE ET DE LA RECHERCHE MEDICALE - INSERM**
  **75013 Paris (FR)**

(72) Inventeurs:
- **DOURNES, Gael**
  **33300 Bordeaux (FR)**
- **BENLALA, Ilyes**
  **33300 Bordeaux (FR)**
- **LAURENT, François**
  **33000 Bordeaux (FR)**

- **BERGER, Patrick**
  **33700 Merignac (FR)**

(74) Mandataire: **Oak & Fox**
  **18-20, rue du Faubourg du Temple**
  **75011 Paris (FR)**

(56) Documents cités:
**WO-A2-2015/092622     FR-A1- 3 057 094**

- **ILYES BENLALA ET AL: "Automated Volumetric Quantification of Emphysema Severity by Using Ultrashort Echo Time MRI: Validation in Participants with Chronic Obstructive Pulmonary Disease", vol. 292, no. 1, 4 June 2019 (2019-06-04), pages 216 - 225, XP009518956, ISSN: 0033-8419, Retrieved from the Internet <URL:https://pubs.rsna.org/doi/suppl/10.1148/radiol.2019190052> DOI: 10.1148/RADIOL.2019190052**
- **ILYES BENLALA ET AL: "Apendix E1 -Supplemental Methods", vol. 292, no. 1, 4 June 2019 (2019-06-04), pages 1 - 8, XP009518964, ISSN: 0033-8419, Retrieved from the Internet <URL:https://pubs.rsna.org/doi/suppl/10.1148/radiol.2019190052> DOI: 10.1148/RADIOL.2019190052**

## Description

Le domaine de l'invention concerne le domaine des procédés pour générer des biomarqueurs de la région pulmonaire. Plus particulièrement, l'invention se rapporte aux méthodes de traitement d'une image afin de quantifier la présence de caractéristiques susceptibles d'être associées à une pathologie donnée. Le domaine de l'invention s'applique plus particulièrement au traitement des images acquises par IRM.

Actuellement, la quantification des phénomènes inflammatoires et de remodelage des voies aériennes est principalement réalisée à partir d'un système d'imagerie par scanner. Cette technique plus connue sous le nom de tomodensitométrie, TDM, ou CT-scan permet d'obtenir des images tridimensionnelles offrant une résolution et des niveaux de contrastes suffisants pour élaborer des stratégies de quantification. D'une manière plus générale, l'imagerie CT-scan permet d'obtenir des indicateurs de l'extension 3D des anomalies des voies pulmonaires.

Toutefois, cette technique présente l'inconvénient d'être irradiante. D'autre part, cette technique ne permet pas de discriminer l'inflammation du remodelage des voies aériennes. Il existe un besoin d'élaborer des biomarqueurs utilisant une imagerie non irradiante, et permettant de caractériser le signal des phénomènes inflammatoires actifs versus le signal des lésions cicatricielles définitives, telle que le permet l'imagerie par IRM.

Or, à ce jour, il est difficile de définir des modalités permettant de traiter les images des régions pulmonaires par IRM du fait que les tissus et les structures cellulaires de ces régions sont variés et difficilement segmentables sans perdre de données. D'autre part, le signal en IRM n'est pas calibré comme pour un scanner, il n'est donc pas possible d'utiliser les données brutes des valeurs de signal sur une image donnée, tandis que les cartographies paramétriques des valeurs réelles du T1 et du T2, sur un poumon, sont de nature à être « artéfactés », c'est-à-dire ayant des erreurs d'acquisition, par la susceptibilité magnétique du poumon normal.

Le document « Automated Volumetric Quantification of Emphysema Severity by Using Ultrashort Echo time MRI : Validation in Participants With Chronic Obstructive Pulmonary Disease", Benlala and al, Radiology 2019, discloses a method de quantification de l'emphysème par IRM.

Toutefois, il n'existe pas à ce jour de modalité d'acquisition qui permet de définir une segmentation adéquate des voies aériennes offrant des possibilités de générer des biomarqueurs suffisamment efficaces pour suppléer une acquisition CT-scan.

Il existe donc un besoin de définir une solution qui puisse répondre à cette problématique. La présente invention vise à résoudre les inconvénients précités.

Selon un premier aspect, l'invention concerne un procédé de génération d'un biomarqueur comportant :

- Acquisition d'une image par un système IRM ;
- traitement de ladite image IRM pour générer une image tridimensionnelle du poumon ;
- génération d'une première fonction correspondant à la distribution des différentes valeurs de l'intensité du signal de chaque voxel d'une portion de l'image tridimensionnelle acquise ;
- calcul automatique d'au moins un seuil de filtrage de ladite première fonction à partir d'au moins une seconde fonction de distribution de différentes valeurs d'intensité du signal de chaque voxel d'une portion de l'image tridimensionnelle acquise ;
- segmentation d'un volume comportant :

  ∘ Un volume principal, correspondant au volume pulmonaire ;
  ∘ Un volume filtré d'un volume de voxels quantifiés par la première fonction et filtré au moyen d'au moins du seuil de filtrage calculé,

- normalisation des valeurs de l'image tridimensionnelle du volume pulmonaire à partir des valeurs absolues des valeurs d'intensité du signal des voxels de l'image et d'au moins le seuil de filtrage calculé;
- génération d'un biomarqueur indiquant un ratio de volume segmenté normalisé.

Le volume pulmonaire correspond au volume délimité par les parois du ou des poumon(s).

Avantageusement, l'invention permet une automatisation de la génération d'un biomarqueur tout en définissant des seuils adaptatifs selon les patients. Un autre avantage est de permettre de configurer une acquisition pour générer différents biomarqueurs selon le cas d'usage que l'on souhaite obtenir.

L'étape de génération d'une première fonction correspondant à la distribution des différentes valeurs de l'intensité du signal de chaque voxel d'une portion de l'image tridimensionnelle acquise correspond, autrement dit, à l'application d'une première fonction entrainant la génération d'une distribution des différentes valeurs de l'intensité du signal de chaque voxel d'une portion de l'image tridimensionnelle acquise.

Selon un exemple, le procédé est mis en œuvre par une fonction au sein d'une console d'exploitation des images IRM acquises ou au sein d'un équipement comportant une interface physique ou sans fil avec la console d'exploitation du système IRM. Afin de mettre en œuvre le procédé de l'invention, une interface pour recevoir les images IRM et une mémoire pour les stocker peuvent être utilisées.

L'équipement permettant de mettre en œuvre le procédé de l'invention comprend avantageusement un afficheur et une interface graphique afin de configurer un paramétrage selon le biomarqueur que l'on souhaite générer.

Selon un mode de réalisation, le procédé comprend

■ l'acquisition d'une image tridimensionnelle par un système IRM configurée par :

◦ une pondération en $T_2$ ;
◦ un temps d'écho TE supérieur à seuil prédéfini ;

■ le calcul automatique d'au moins un seuil comprenant :

◦ acquisition d'un volume de référence ;
◦ génération d'une fonction de référence correspondant à une distribution des différentes valeurs de l'intensité du signal de chaque voxel du volume de référence, ladite fonction de référence étant la seconde fonction de distribution ;
◦ calcul de l'écart-type de la fonction de référence ;
◦ détermination d'un seuil de référence à partir de l'écart-type calculé de la fonction de référence.

Un avantage est de permettre de générer un biomarqueur permettant de quantifier un volume de charge en mucus et/ou d'œdème sans mettre en œuvre une technique irradiante.

Selon un exemple de ce mode de réalisation, l'acquisition est paramétrée et comprend :

■ Une acquisition d'une image composée d'une pluralité d'images acquises sur un nombre de cycle(s) d'au moins 4 temps d'écho, les temps d'échos étant configurés selon des durées croissantes ;
■ Une séquence Echo de spin ;
■ Un paramétrage visant à émettre un signal pour pré-saturer ou une saturer du signal acquis.

Un avantage est notamment d'améliorer le traitement des volumes circulants afin de les supprimer du traitement d'images.

Selon un exemple de ce même mode de réalisation, une seconde acquisition de l'image est réalisée avec une première configuration pour détourer le volume pulmonaire, une étape de traitement d'image étant réalisée pour combiner l'image acquise en pondération $T_2$ avec l'image acquise par la seconde acquisition. La première configuration définit un paramétrage d'une acquisition en pondération $T_1$ ou en densité de protons. Dit autrement, la première acquisition permet de configurer une pondération de type $T_1$ ou une pondération en densité de proton.

Un avantage est de construire un masque permettant de détourer le volume pulmonaire et des organes comme le cœur afin de traiter l'image acquise en pondération $T_2$. En effet, généralement l'image acquise en pondération $T_2$ ne permet pas d'obtenir une segmentation du volume pulmonaire qui permet à elle seule de détourer les contours des organes.

Selon un exemple de ce mode de réalisation, une opération de fusion entre au moins une image acquise en pondération $T_1$ avec un temps d'écho ultra court UTE et au moins une image acquise par une pondération T2 est réalisée pour générer une image dont les données provenant de chacune des images acquises ont été combinées pour segmenter le volume pulmonaire.

Un avantage est de générer une image à partir de la fusion de deux images, l'image produite offrant une capacité d'isolation optimale des zones d'intérêt au sein d'un volume pulmonaire.

Selon un exemple de ce mode de réalisation, le seuil de référence est déterminé à partir d'une combinaison entre une valeur de répartition de référence de la fonction de référence $F_A$ et une valeur comprise entre 10 et 20 fois la valeur de l'écart-type $6_A$ de la fonction de référence $F_A$.

Un avantage est de permettre d'éliminer un niveau de bruit. Un autre avantage est de définir un seuil adaptatif afin de générer un seuil compatible avec un grand nombre de patients.

Selon un exemple de ce mode de réalisation, la valeur de répartition de référence de la fonction de référence $F_A$ est le mode principal $M_B$ de la répartition des valeurs d'intensité du signal de l'image acquise en pondération $T_2$ au sein du volume pulmonaire $V_P$. Un avantage est d'utiliser une valeur de référence pour réaliser un filtre qui puisse être appliqué à différents types de patients ayant des profils différents. Ainsi, le filtre est adaptatif et permet de s'affranchir de la configuration d'acquisition ou des profils de patients. La sélection du mode principal permet de définir un seuil adaptatif pour chaque patient.

Selon un exemple de ce mode de réalisation, le procédé comprend une étape de normalisation, la normalisation comprenant le calcul d'un indice volumique du signal VIP à partir des valeurs absolues du signal du volume filtré $V_F$, du volume résultant du volume filtré $V_F$ et du volume pulmonaire $V_P$. Un avantage est de quantifier des niveaux d'inflammation, par exemple, d'une zone du poumon. Un autre avantage est qu'il est possible de quantifier la propagation d'une inflammation dans le temps.

Selon un autre mode de réalisation, le procédé de génération d'un biomarqueur est caractérisé en ce que :

■ l'acquisition d'une image tridimensionnelle par un système IRM, est configurée par :

◦ une pondération en densité de proton ou en $T_1$, le temps d'écho ;
◦ un temps d'écho inférieur à seuil prédéfini ;

■ le calcul automatique d'au moins un seuil comprend :

○ modélisation d'au moins deux fonctions gaussiennes par ajustement de la première fonction ;
○ détermination du premier seuil de filtrage par un calcul de l'intersection de la première fonction gaussienne et de la seconde fonction gaussienne ;
○ détermination d'un second seuil correspondant à une valeur minimale de la première fonction gaussienne et une valeur minimale d'une valeur de l'intensité du signal d'un voxel ;

▪ Le volume filtré est un premier volume correspondant aux voxels quantifiés par la première fonction gaussienne comprise entre le premier seuil et le second seuil, lesdits voxels correspondant à un milieu aérien,
▪ normalisation des valeurs de l'image tridimensionnelle du volume pulmonaire à partir du premier seuil et du second seuil calculés,
▪ génération d'un premier biomarqueur indiquant un ratio d'un volume caractéristique du volume segmenté normalisé, ledit ratio étant calculé entre le volume caractéristique et le volume pulmonaire.

Un avantage de cette configuration est d'obtenir une bonne segmentation du poumon tout en isolant des volumes caractéristiques grâce à un biomarqueur qui peut être représentatif d'un phénomène lié à l'emphysème.

Selon un exemple de ce mode de réalisation, le temps d'écho est inférieur à 1ms. Un avantage d'une configuration d'acquisition avec un TE relativement court est d'être insensible aux courants de Foucault. Cette configuration permet de maximaliser le signal dans le parenchyme pulmonaire.

Selon un exemple de ce mode de réalisation, la segmentation comprend la définition d'un second volume correspondant aux voxels quantifiés par la seconde fonction gaussienne supérieure au premier seuil, lesdits voxels correspondant à un milieu intermédiaire ou graisseux. Un avantage est d'améliorer la segmentation des différents volumes dans le poumon.

Selon un exemple de ce mode de réalisation, la segmentation comprend une étape d'extraction d'un volume caractéristique comportant des voxels du volume filtré dont la valeur d'intensité du signal est inférieure à un troisième seuil prédéfini, ledit seuil prédéfini étant déterminé sur une échelle normalisée de [0 ; 1]. Un avantage est d'obtenir un biomarqueur représentatif du phénomène d'emphysème.

Selon un exemple de ce mode de réalisation, la segmentation comprend une étape d'exclusion/suppression des voxels déconnectés à leur voisinage de voxels d'une même quantification. Un avantage est de de réduire les artefacts de l'acquisition et de sélectionner les volumes correspondant réellement à un volume caractéristique d'une pathologie.

Selon un exemple de ce mode de réalisation, la modélisation des fonctions gaussiennes comprend :

▪ Un lissage gaussien appliqué à l'image acquise avec réduction du temps de codage ponctuel et avec acquisition radiale pour le débruitage ;
▪ Détourage des contours par application d'un filtre local ;
▪ Utilisation de la méthode d'ajustement de courbe représentant la fréquence de distribution de voxels.

Un avantage est d'obtenir une modélisation réaliste et fidèle d'une répartition de l'intensité des valeurs du signal dans l'image. La fonctionnalisation du traitement à partir des fonctions gaussiennes permet de générer un traitement identique pour chaque patient qui soit représentatif et en même temps adaptatif.

Selon un mode de réalisation, le procédé comprend l'acquisition des valeurs d'intensité du signal de chaque voxel quantifiées par la première fonction, les valeurs d'intensité correspondant à une donnée de contraste d'image.

Selon un mode de réalisation, l'acquisition est réalisée de manière synchronisée avec un respirateur. Selon un exemple, le respirateur est un navigateur ou une ceinture respiratoire. Un avantage est de s'affranchir des mouvements du poumon lors de l'acquisition de l'image.

Selon un mode de réalisation, une étape d'extraction d'une image volumétrique est réalisée à partir des images acquises par l'IRM, ladite image extraite étant réalisée à un instant déterminé de la séquence.

Selon un autre mode de réalisation, l'acquisition de l'image tridimensionnelle est réalisée au moyen d'un empilement d'images 2D acquises, l'épaisseur de la coupe étant égale au moins à la largeur d'un voxel.

Selon un autre aspect, l'invention concerne un système comportant au moins un calculateur et une mémoire et une interface pour recevoir une image acquise par un système IRM, ledit système étant configuré pour mettre en œuvre les étapes du procédé de l'invention. Avantageusement, un afficheur permet de visualiser les images IRM acquises et les images traitées. Les biomarqueurs peuvent être représentés graphiquement au sein d'une image générée. Selon un exemple, une interface graphique permet de régler les paramètres d'acquisition et de définir les zones d'intérêt ou une pathologie recherchée.

Selon un mode de réalisation, une première acquisition et une seconde acquisition selon la méthode de l'invention sont réalisées successivement au sein d'un cycle respiratoire, chaque acquisition étant synchronisée avec une donnée caractéristique d'une inspiration et respectivement d'une expiration, le procédé comprenant, en outre :

▪ la génération du premier biomarqueur pour chaque acquisition d'un même cycle respiratoire ;
▪ une extraction d'une quantification d'un volume principal pour chaque acquisition d'un même cycle respiratoire et,

- un recalage élastique entre ces deux temps respiratoires afin de sélectionner des voxels représentatifs d'un écart corrigé entre les deux biomarqueurs générés à chacune des acquisitions.

Selon un mode de réalisation, le procédé comprend une quantification normalisée desdits voxels sélectionnés entre les deux acquisitions.

Selon un mode de réalisation, l'acquisition est une acquisition 4D configurée pour acquérir sur une durée prédéfinie une variation du premier biomarqueur par unité de temps.

Selon un mode de réalisation, l'acquisition 4D est configurée pour acquérir un volume de voxels sur une unité de temps correspondant à une durée d'un cycle respiratoire, ladite acquisition étant synchronisée avec une donnée caractéristique d'une inspiration et/ou d'une expiration.

D'autres caractéristiques et avantages de l'invention ressortiront à la lecture de la description détaillée qui suit, en référence aux figures annexées, qui illustrent :

Fig. 1 : des étapes d'un mode de réalisation d'un procédé de l'invention ;

Fig. 2 : un premier mode de réalisation du procédé de l'invention appliqué pour quantifier un volume pulmonaire aérien afin de générer un premier biomarqueur ;

Fig. 3 : un second mode de réalisation du procédé de l'invention appliqué pour quantifier un volume d'encombrement des voies aériennes afin de générer un second biomarqueur ;

Fig. 4 : une coupe 2D d'une image tridimensionnelle du poumon, la coupe ou l'image tridimensionnelle étant acquise au moyen d'un système IRM ;

Fig. 5 : un exemple d'utilisation de deux fonctions pour déterminer un premier seuil afin de générer un premier biomarqueur normalisé selon le premier mode de réalisation ;

Fig. 6A : un exemple d'une courbe quantifiant les différents contrastes de l'image 2D obtenue par un scanner ainsi qu'un seuil permettant de générer un indicateur représentant une quantification de l'emphysème d'un patient atteint d'une bronchopneumopathie chronique obstructive ;

Fig. 6B : un exemple d'une courbe quantifiant les différents contrastes de l'image 2D obtenue par un scanner ainsi qu'un seuil permettant de générer un indicateur représentant une quantification de l'emphysème d'un patient sain ;

Fig. 7A : un exemple d'une courbe quantifiant les différents contrastes de l'image 2D obtenue par une IRM et traitée selon le procédé de l'invention pour calculer automatiquement un seuil permettant de générer un indicateur représentant une quantification de l'emphysème d'un patient atteint d'une bronchopneumopathie chronique obstructive ;

Fig. 7B : un exemple d'une courbe quantifiant les différents contrastes de l'image 2D obtenue par une IRM et traitée selon le procédé de l'invention pour calculer automatiquement un seuil permettant de générer un indicateur représentant une quantification de l'emphysème d'un patient sain ;

Fig. 8 : une représentation d'une quantité d'un volume encombré (ex : sécrétion de mucus) d'un volume pulmonaire chez un patient dans un plan de coupe d'une IRM,

Fig. 9 : une représentation d'un seuil de référence permettant de filtrer les voxels de hautes intensités afin de générer un masque.

**Définitions**

Dans la suite de la description, une image tridimensionnelle comporte une pluralité de pixels volumiques, appelés également voxel. On nommera indifféremment un pixel ou un voxel de l'image.

Dans la suite de la description, on nommera un « hyposignal » un signal de faible intensité, apparaissant sur l'image IRM comme une plage noire ou gris foncé. C'est le cas en l'absence de protons (air), des substances à $T_2$ court (tissus calcifiés (os cortical, émail, calcifications), des tissus riches en collagène (tendons, ligaments, fascias...), des liquides riches en protéines, des liquides stagnants (urine, LCS, épanchements, œdème, inflammation...), des substances à effet paramagnétique (gadolinium concentré), du fer en concentration élevée (hémochromatose), des certains hématomes, etc.

Dans la suite de la description, on nommera un « hypersignal », un signal de forte intensité, apparaissant sur l'image IRM comme une plage blanche ou gris pâle. En $T_1$, c'est le signal des substances à $T_1$ court : lipides (graisse, tumeurs graisseuses, moelle osseuse grasse...), liquides riches en protéines (mucocèles, kystes tumoraux...), substances à effet paramagnétiques (gadolinium...), fer (hématome subaigu), radicaux libres (mélanine), posthypophyse.... En $T_2$, c'est le cas de l'eau libre (urine, LCS, épanchements, liquide synovial...) de l'eau interstitielle (œdème, inflammation...), du sang stagnant, des liquides pauvres en protéines, etc.

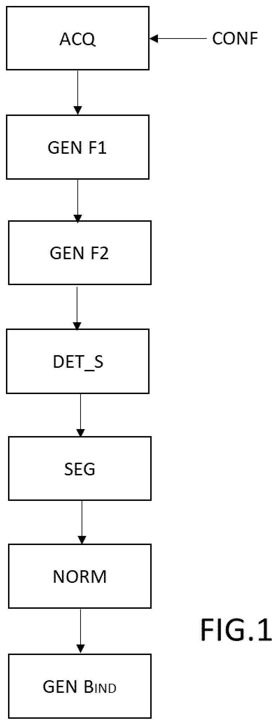

La figure 1 représente les principales étapes d'un exemple de réalisation du procédé de l'invention. Les étapes comprennent une acquisition d'une image ou d'une séquence d'images par un système IRM. L'acquisition est, par exemple, réalisée par acquisition de coupes 2D qui sont ensuite empilées pour former une image tridimensionnelle. Selon un autre exemple, l'acquisition est une acquisition directement tridimensionnelle qui permet d'obtenir une image 3D. L'invention est compatible également d'une acquisition dite « 4D » dans laquelle l'échelle temporelle est prise en compte pour générer et reconstruire une image par un algorithme de traitement d'images.

Selon un mode de réalisation, un dispositif de mesure du rythme respiratoire est utilisé pour acquérir le signal avec une synchronisation respiratoire. Un respirateur peut être utilisé ou tout autre dispositif permettant de synchroniser le rythme respiratoire avec l'acquisition d'image. Cette caractéristique permet d'obtenir des acquisitions moins sensibles aux mouvements.

Le procédé de l'invention comporte une étape visant à générer une première fonction de distribution $F_1$ d'une répartition de voxels de l'image en fonction de l'intensité du signal. La résolution du paramètre est configurée selon la modalité d'acquisition de l'image IRM. Selon d'autres modes de réalisation, l'intensité du signal prise en compte est représentée à partir d'un niveau de teinte, de saturation ou de luminosité ou une combinaison de ces trois facteurs. Selon un exemple, l'intensité du signal est un paramètre codé selon une échelle absolue selon l'image acquise. Selon un autre exemple, le paramètre est codé selon une échelle relative en fonction de l'amplitude de variation du paramètre sur l'ensemble des voxels de l'image acquise.

La première fonction $F_1$ permet donc de rendre compte de la distribution de cette intensité du signal dans l'image.

Le procédé de l'invention comprend une étape de génération d'une seconde fonction $F_2$ permettant de calculer automatiquement un seuil appliqué à la fonction $F_1$ afin de normaliser les valeurs de distribution obtenues.

La seconde fonction $F_2$ est avantageusement une fonction décrivant une répartition de l'intensité du signal de l'image. Selon différentes réalisations, cette fonction peut être mise en œuvre et définie de manière à optimiser le calcul du seuil, à générer un seuil permettant une normalisation optimisée ou encore en fonction d'un objectif d'identification d'un motif dans l'image ou d'une singularité liée à la répartition de la fonction $F_1$.

Le procédé de l'invention comprend une étape, DET_S, permettant de déterminer au moins un seuil automatiquement. Le au moins un seuil déterminé est notamment utilisé pour filtrer la distribution de l'intensité du signal représentée par la première fonction $F_1$ ou par la seconde fonction $F_2$.

Selon différentes réalisations, une pluralité de seuils peut être déterminée. Les seuils peuvent être déterminés par une opération ou une combinaison d'opérations sur au moins la seconde fonction $F_2$. Les opérations peuvent comprendre des calculs d'intersection de courbes, des calculs d'écart-type ou encore la détermination d'une valeur caractéristique, ou encore tout autre type de calculs pouvant être réalisés sur une fonction numérique.

Le procédé comprend une étape SEG visant à segmenter un volume de l'image acquise, en sélectionnant les pixels relatifs à la fonction $F_1$, filtrée avec au moins un seuil précédemment déterminé.

La segmentation comprend la segmentation du volume pulmonaire $V_P$ et d'au moins un volume filtré $V_F$ Le volume filtré $V_F$ peut correspondre à un volume obtenu après filtrage de la fonction $F_1$ ou $F_2$. Cette segmentation peut être réalisée en plusieurs étapes. Une première étape peut correspondre à la segmentation du volume pulmonaire $V_P$, c'est-à-dire à l'enveloppe du poumon.

Selon un mode de réalisation, le procédé de l'invention comprend une étape de normalisation qui permet de normaliser notamment la proportion d'un volume filtré $V_F$ segmentée sur le volume pulmonaire $V_P$.

Selon un mode de réalisation, le procédé de l'invention comprend une étape visant à extraire un volume caractéristique du volume filtré qui soit représentatif d'un signe physiologique. Il peut s'agir d'un biomarqueur permettant de quantifier ou qualifier la présence d'une pathologie.

Le procédé permet donc de générer un biomarqueur $B_{IND}$ permettant d'évaluer la proportion d'un volume caractéristique Vc.

Selon un premier mode de réalisation de l'invention, une mise en œuvre du procédé permet de générer un premier biomarqueur $B_{IND1}$. Selon une autre mise en œuvre, soit un second mode de réalisation, le procédé de l'invention permet de générer un second biomarqueur $B_{IND2}$.

## Premier Biomarqueur

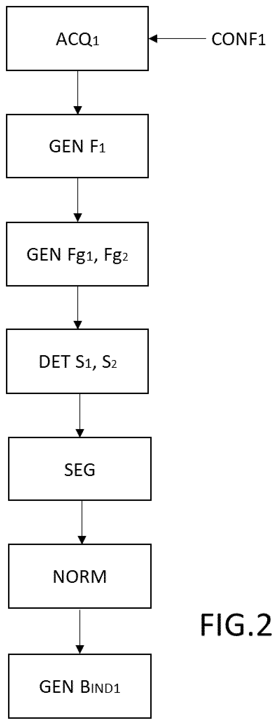

La figure 2 représente les principales étapes du premier mode de réalisation de l'invention. Dans cette réalisation, une première configuration $CONF_1$ du système d'imagerie par IRM est réalisée. La première configuration $CONF_1$ permet de configurer une pondération de type $T_1$ ou une pondération en densité de proton. Dans les deux cas de pondération, le temps d'écho, noté TE, est défini inférieur à un seuil prédéfini. Le temps de répétition, noté TR, est lui configuré selon une plage de valeurs considérée comme courte ou longue selon la pondération utilisée. L'homme de l'art saura établir l'association entre la configuration TE, TR et la pondération choisie.

### - Acquisition

Cette acquisition IRM peut être volumique, c'est-à-dire que l'image obtenue est directement une image tridimensionnelle. Cette configuration $CONF_1$ permet de définir un temps d'écho ultracourt, dit "UTE", ou bien une séquence Zéro TE, également appelée ZTE.

La séquence UTE peut être utilisée pour acquérir une image 3D isotrope. Les images 3D peuvent être obtenues, par exemple, au moyen d'une acquisition cylindrique avec des plans radiaux empilés ou une acquisition sphérique en utilisant des projections radiales dans les trois directions. Un choix possible est de prendre les extrémités des rayons sur la surface de la sphère répartis sur des spirales. De tels modes d'acquisition sont décrits par exemple dans la publication « IRM pulmonaire 3D à temps d'écho ultracourt par acquisition spiralée ou sphérique de l'espace-k », Joseph Yazbek. Le remplissage du volume se fait par le gradient de lecture. On aboutit alors à une surface discrétisée de manière sensiblement uniforme en coordonnées sphériques.

La séquence ZTE est également une technique d'acquisition 3D. cette technique comporte l'application d'un gradient d'amplitude stable et l'envoie d'une impulsion RF ayant une durée très courte et un angle de bascule faible. L'acquisition commence après une durée donnée qui correspond à la bascule entre l'émission et la réception. Entre deux TRs, l'amplitude du gradient de lecture augmente graduellement. Cette configuration présente l'avantage d'être insensible aux courants de Foucault du fait qu'il n'y a pas de contrainte sur la vitesse de variation de l'intensité du gradient pendant la durée d'acquisition.

Un intérêt d'une séquence UTE ou ZTE est de maximiser le signal disponible dans le parenchyme pulmonaire.

L'image acquise peut être traitée par des algorithmes de traitements d'image afin de réduire le bruit, supprimer des artefacts ou encore adapter une échelle de contraste.

Selon un mode de réalisation, lorsque l'acquisition est réalisée en 2D et non en 3D, une étape de reconstruction d'une image 3D peut être réalisée par empilement de couches 2D. L'image tridimensionnelle obtenue, et éventuellement traitée, comporte alors une pluralité de voxels.

**- Traitement d'image**

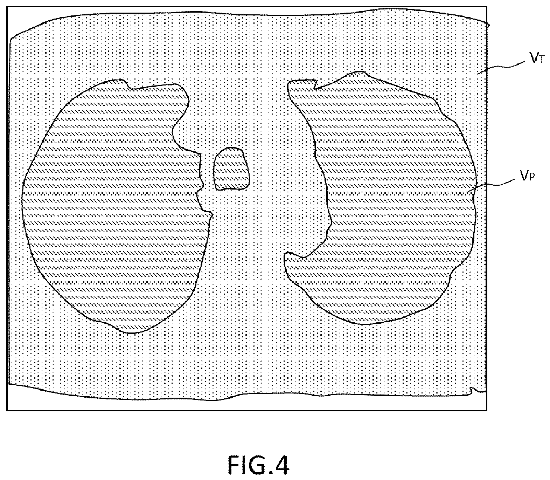

La figure 4 représente une coupe d'une image tridimensionnelle de chaque poumon ayant un volume pulmonaire $V_P$. Le volume de la cage thoracique est par exemple ici représenté par le volume $V_T$. Dans cette image est illustré le contour de l'enveloppe de chaque poumon notamment grâce à une discontinuité de l'intensité du signal des voxels délimitant le volume de chaque poumon avec le volume de la cage thoracique.

Selon un mode de réalisation, le système d'imagerie IRM est configuré avec une séquence PETRA. Selon un exemple de réalisation, un filtre rehausseur de contours peut être appliqué à l'image acquise. Un intérêt est d'obtenir une meilleure définition des contrastes de l'image. Le détourage des contours peut être obtenu à partir de l'application d'un filtre local.

Selon un mode de réalisation, le procédé de l'invention comporte une étape de lissage gaussien appliqué à l'image acquise avec réduction du temps de codage ponctuel et avec acquisition radiale pour le débruitage. Un intérêt de ce traitement est de réduire le bruit obtenu lors de l'acquisition par cette méthode de traitement de la régularité supposé de la courbe obtenue.

**- Extraction du volume pulmonaire**

Le procédé de l'invention permet de générer une courbe $C_1$ représentant la répartition ou la distribution des voxels selon la valeur de l'intensité du signal ou d'un paramètre colorimétrique. Cette répartition peut être limitée au volume pulmonaire $V_P$ en procédant préalablement à l'extraction de l'enveloppe 3D du poumon. Cette extraction peut être réalisée automatiquement par un algorithme de traitement de contours basés sur l'analyse de la valeur de l'intensité du signal ou d'un paramètre colorimétrique des voxels et de leur voisinage.

La valeur de l'intensité du signal ou le paramètre colorimétrique permettant de réaliser une distribution des voxels est avantageusement une donnée de contraste. Tout autre type de paramètre pourrait être utilisé en fonction de l'image acquise. Par exemple, une donnée de luminosité, de teinte ou encore de saturation peut être utilisée en combinaison ou en variante de la donnée de contraste.

Ainsi, une première fonction $F_1$ représente la courbe de distribution de voxels dans le volume pulmonaire $V_P$ selon une résolution donnée. La résolution donnée correspond à la résolution de l'acquisition de l'image. La résolution est donc dépendante de la configuration d'acquisition de l'image.

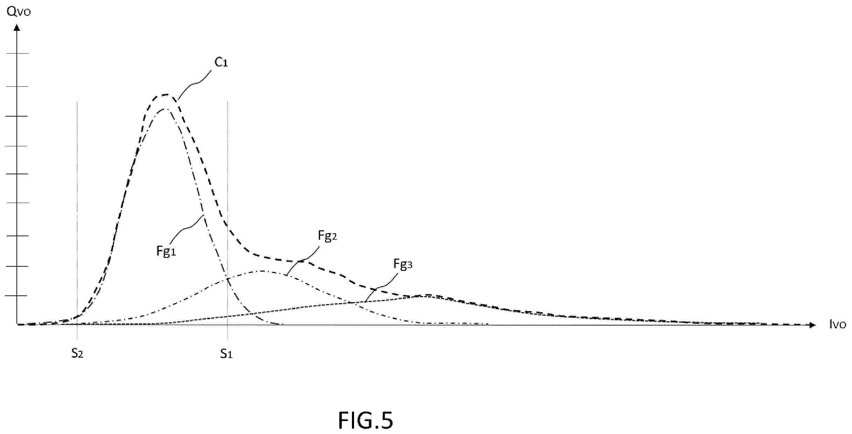

La fonction $F_1$ peut être une fonction continue ou une fonction discrète. Dans ce dernier cas, les voxels peuvent être rassemblés selon une échelle définissant une unité de contraste. Cette échelle peut être prédéfinie ou automatiquement calculée en fonction, par exemple, d'une valeur minimale et d'une valeur maximale et du volume pulmonaire et/ou en fonction du nombre de voxels considérés. La courbe $C_1$ qui est la représentation graphique de la fonction $F_1$ est illustrée à la figure 5.

Selon un mode de réalisation, l'extraction des volumes à l'intérieur du volume pulmonaire $V_P$, tels que le volume filtré $V_F$ ou le volume caractéristique $V_C$, comprend un traitement d'images permettant d'exclure, voire de supprimer, des voxels d'une même gamme de contraste qui sont déconnectés des voxels de leur voisinage. Un intérêt est de supprimer les faux positifs, erreurs d'acquisition ou encore les voxels en dehors de zones d'intérêt représentatives d'un signe physiologique ou pathologique.

Le procédé de l'invention comporte une étape de calcul automatique d'au moins un seuil $S_1$ permettant de filtrer les voxels de la distribution représentée par la fonction $F_1$ ou d'une fonction modélisant la fonction $F_1$.

Dans ce premier mode de réalisation, deux seuils $S_1$ et $S_2$ sont calculés. Le seuil $S_1$ définit une valeur maximale et le second seuil définit une valeur minimale de la valeur de l'intensité du signal ou du paramètre colorimétrique considéré pour générer la distribution des voxels.

**- Définition de la seconde fonction**

Selon ce premier mode de réalisation, afin de déterminer des seuils optimaux, le procédé comporte une étape visant à modéliser au moins deux fonctions gaussiennes $Fg_1$, $Fg_2$ par ajustement de la première fonction $F_1$.

Ces deux fonctions gaussiennes $Fg_1$, $Fg_2$ sont obtenues de sorte qu'elles modélisent chacune une répartition du signal du volume pulmonaire $V_P$, c'est-à-dire de la distribution des voxels dans le volume pulmonaire $V_P$.

La première fonction gaussienne $Fg_1$ modélise essentiellement les signaux du volume pulmonaire $V_P$ correspondant à un milieu aérien. La seconde fonction gaussienne $Fg_2$ modélise essentiellement les signaux du volume pulmonaire $V_P$ correspondant à un milieu intermédiaire, tel que le cœur, les muscles, les vaisseaux ou la moelle osseuse.

La modélisation par ajustement de la courbe $C_1$ permet d'obtenir deux fonctions $Fg_1$ et $Fg_2$ représentant deux répartitions gaussiennes. La figure 5 représente les courbes associées aux fonctions $Fg_1$, $Fg_2$. Une troisième courbe $Fg_3$ représentée également sur la figure 5 peut être obtenue par ajustement de la courbe $C_1$. La fonction $Fg_3$ modélise essentiellement les signaux du volume pulmonaire $V_P$ correspondant à un milieu graisseux.

- **Génération des seuils**

Le premier seuil $S_1$ est généré automatiquement par un calcul de l'intersection des courbes $Fg_1$ et $Fg_2$. Le premier seuil $S_1$ définit une valeur maximale d'une quantification du signal dans le volume pulmonaire $V_P$. Dans le cas de la figure 5, il s'agit d'une valeur maximale d'un paramètre de contraste. La valeur maximale $S_1$ permet de filtrer les voxels de la distribution de $C_1$ en dessous de la valeur du premier seuil $S_1$.

Un intérêt de la définition du premier seuil $S_1$ est d'obtenir la meilleure segmentation entre les valeurs du tissu parenchymateux pulmonaire et les parties molles.

Le second seuil $S_2$ est généré automatiquement en considérant une valeur minimale de contraste définissant les premiers voxels ayant un premier niveau de contraste. La figure 5 représente le second seuil $S_2$.

Un intérêt est de s'affranchir de la variabilité des valeurs absolues du signal de l'image qui peuvent être dépendantes d'un patient à l'autre ou d'une configuration donnée à une autre. Le procédé de l'invention permet de considérer la valeur minimale du signal de l'image comme une valeur normalisée à 0.

Une étape de segmentation SEG du volume pulmonaire est alors réalisée dans l'objectif d'extraire le volume filtré $V_F$ définissant les voxels de la courbe $C_1$ dont la valeur de l'intensité du signal ou dont le paramètre colorimétrique est compris entre le second seuil $S_2$ (valeur minimale) et le premier seuil $S_1$ (valeur maximale).

Le volume du poumon $V_P$ formant l'enveloppe de chaque poumon est également extrait à cette étape s'il ne l'a pas été précédemment.

- **Normalisation**

Le procédé comporte une étape de normalisation NORM permettant de normaliser les valeurs des signaux comprises entre les deux seuils $S_2$ et $S_1$. La valeur minimale correspondant au seuil $S_2$ est définie à la valeur 0 et la valeur maximale correspondant au seuil $S_1$ est définie à la valeur 1. Les valeurs à 0 sont proches des valeurs des voxels correspondant à un milieu aérien intra-pulmonaire. Les valeurs à 1 sont proches des valeurs de voxels correspondant à des parties molles thoraciques.

Le procédé de l'invention permet donc de sélectionner un premier seuil $S_1$ adaptatif qui permet de quantifier le volume de signaux dont la valeur est inférieure à ce premier seuil $S_1$.

Avantageusement, le procédé permet de prendre en compte une variation possible du niveau du seuil selon les patients.

- **Acquisition 4D pour le suivi du biomarqueur**

Le procédé de l'invention peut être appliqué soit à partir d'une image IRM tridimensionnelle statique soit à partir d'une image IRM tridimensionnelle dynamique avec une composante temporelle supplémentaire. On parle alors d'acquisition 4D. Un intérêt d'une acquisition 4D est de générer un marqueur dynamique qui permet d'évaluer la variation temporelle du premier biomarqueur $BIO_{IND1}$ pendant une durée donnée. Cette acquisition est particulièrement intéressante lorsque la variation de l'indicateur est mesurée entre l'inspiration et l'expiration d'un patient. Le premier biomarqueur $BIO_{IND1}$ permet alors de quantifier une atteinte fonctionnelle des petites voies aériennes.

En effet, une mesure globale de la variation de signal pulmonaire au cours du temps ne permet pas de discriminer systématiquement des lésions de destructions fixées, dites emphysème, d'une atteinte potentiellement réversible des petites voies aériennes, ou trappage alvéolaire. Un intérêt de l'invention est donc de définir un biomarqueur dynamique permettant d'obtenir une quantification des voxels qui puisse permettre de discriminer l'emphysème d'une atteinte réversible des petites voies aériennes.

La méthode d'acquisition 4D de l'invention est particulièrement adaptée et efficace pour le traitement des hypo-signaux pulmonaires.

L'acquisition 4D du poumon peut se faire selon deux modes de réalisation.

Dans un premier mode, deux acquisitions statiques sont réalisées. Une première acquisition est réalisée lors de l'inspiration, la seconde acquisition est réalisée lors de l'expiration ou lorsque le patient est en apnée. Chaque acquisition peut être déclenchée conjointement à une synchronisation de la respiration prospective ciblée. La synchronisation peut être réalisée par exemple à partir d'un dispositif visant à mesurer l'air expiré ou inspiré d'un patient.

Dans un deuxième mode, une acquisition en respiration libre est réalisée et une synchronisation respiratoire rétrospective permet de décomposer l'ensemble du cycle respiratoire.

Selon le premier mode de réalisation, l'extraction des signaux ciblés comme étant représentatifs de l'emphysème, et l'extraction des signaux globaux du parenchyme pulmonaire, permet de réaliser un recalage élastique entre ces deux temps respiratoires et donc de soustraire les voxels identifiés comme étant de l'emphysème, de ceux relatifs à la variation globale du parenchyme pulmonaire, afin d' avoir une mesure précise et objective du trappage alvéolaire. Cette discrimination n'est pas aisément possible avec une simple mesure globale de la variation du signal pulmonaire. Ce mode d'acquisition est donc particulièrement avantageux pour générer un biomarqueur dynamique qui soit représentatif de voxels d'intérêt lorsqu'ils quantifient cette discrimination.

Selon un mode de réalisation, lorsqu'une première acquisition est réalisée à l'inspiration et qu'une seconde acquisition est réalisée à l'expiration, les acquisitions sont configurées pour se déclencher à chaque cycle respiratoire aux instants du cycle. Dans ce mode de réalisation, deux acquisitions sont réalisées dans un cycle respiratoire.

Selon une variante de réalisation, l'acquisition est réalisée à chaque inspiration, et le volume différentiel est mesuré entre deux inspirations. Selon une autre variante de réalisation, l'acquisition est réalisée à chaque expiration, et le volume différentiel est mesuré entre deux expirations. Dans ce cas une seule acquisition est réalisée dans un cycle respiratoire.

Selon le deuxième mode de réalisation, la variation du volume d'emphysème au cours du temps, soit lors de l'inspiration, soit lors de l'expiration, permet d'obtenir une variation de volume par unité de temps de cet emphysème. Ce biomarqueur dynamique est donc un reflet de la compliance pulmonaire.

Selon l'un ou l'autre des deux modes de réalisation, un seuillage des intensités de voxels peut être configuré lors de l'acquisition pendant la phase d'inspiration et/ou pendant la phase d'expiration. Le procédé de l'invention permet d'effectuer une mesure des variations dans chaque seuillage configuré. Ces variations peuvent être mesurées entre deux acquisitions statiques ou pendant une acquisition 4D.

Un avantage est d'obtenir un marqueur dynamique ayant une capacité de discrimination lors d'une dynamique respiratoire. Un intérêt est de discriminer avec une meilleure efficacité des volumes de voxels correspondant à des pathologies différentes.

Selon un mode d'usage, le biomarqueur dynamique peut être utilisé en complément d'un biomarqueur statique de l'invention pour confirmer ou infirmer une première caractérisation de l'image acquise et d'une situation pathologique.

**- Définition d'un troisième seuil pour générer le biomarqueur**

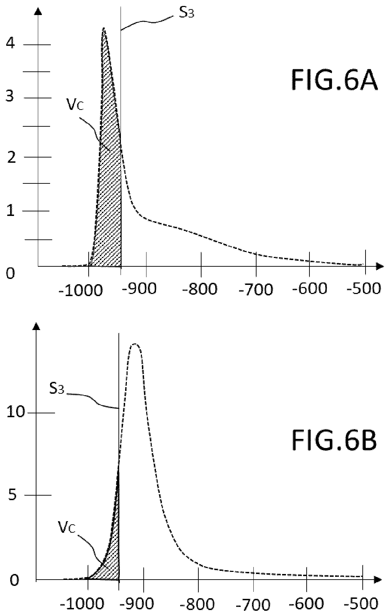

Les figures 6A et 6B représentent des courbes de distribution de signal d'un volume segmenté à partir d'une image obtenue par un scanner. Dans cet exemple, un seuil $S_3$ prédéfini sur une échelle donnée permet de discriminer un poumon comportant un volume caractéristique Vc représenté à la figure 6A plus important que le volume caractéristique Vc obtenu dans un cas représenté à la figure 6B. Le volume Vc peut correspondre à un milieu intermédiaire corroborant un signe physiologique donné. Les courbes obtenues aux figures 6A et 6B peuvent correspondre à celles de deux patients. La figure 6A est caractéristique de la présence d'emphysème. La figure 6B est caractéristique d'un sujet sain.

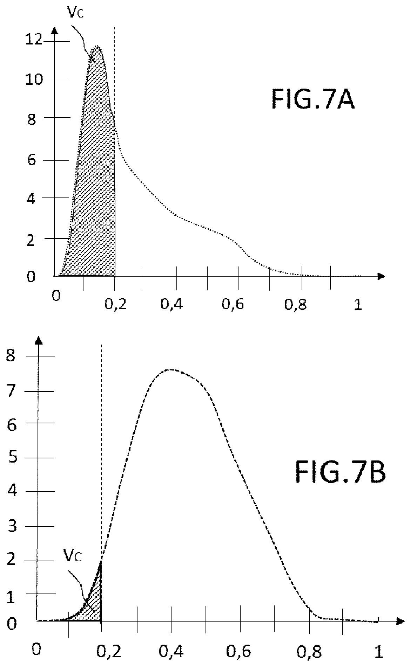

Les figures 7A et 7B représentent des courbes de distribution de signaux compris entre les deux seuils $S_1$ et $S_2$ d'un volume segmenté caractéristique Vc obtenu par la mise en œuvre du procédé de l'invention. La figure 7A correspond, par exemple, au même patient que la figure 6A et la figure 6B au même patient que la figure 7B. Les figures 7A et 7B sont obtenues à partir d'un système d'imagerie IRM conformément au procédé de l'invention.

La figure 7A représente un volume caractéristique Vc obtenu pour des voxels ayant une valeur inférieure à un seuil prédéfini sur une échelle normalisée de 0 à 1. Dans le cas de la figure 7A et 7B, le seuil prédéfini correspond à une valeur de 0,2. Ce seuil permet d'obtenir une bonne représentativité de l'emphysème des patients lorsque les hypo-signaux sont significativement représentés en dessous de ce troisième seuil $S_3$.

Lorsque le seuil $S_3$, compris entre les seuils $S_2$ et $S_1$, est bas, c'est-à-dire proche de 0, par exemple entre 0 et 0,30, le premier biomarqueur $BIO_{IND1}$ peut être utilisé dans la détection de signes propres à un phénomène d'emphysème.

Lorsque le seuil $S_3$, compris entre les seuils $S_2$ et $S_1$, est un seuil ayant une valeur intermédiaire, c'est-à-dire une gamme de valeurs définies autour de la valeur médiane ou moyenne de l'échelle [0 ; 1], par exemple entre 0,35 et 0,65, le biomarqueur $BIO_{IND1}$ peut être utilisé comme un marqueur du piégeage des voies aériennes.

Ce niveau de premier seuil permet donc de générer un biomarqueur $BIO_{IND1}$ permettant de classifier certains patients selon une donnée physiologique.

Un intérêt de la figure 7A vis-à-vis de la figure 6A est que la portion du volume caractéristique Vc obtenu est plus importante avec le procédé de l'invention qu'avec une méthode de l'état de l'art. Par ailleurs la différence entre un sujet saint représenté à la figure 7B et un sujet atteint d'emphysème est plus significative entre les figures 7A et 7B qu'entre les figures 6A et 6B.

Le seuil $S_3$ défini à 0,2 sur l'échelle normalisée permet d'obtenir des résultats satisfaisants pour le praticien permettant de discriminer la présence d'un volume caractéristique d'un milieu intermédiaire dans le poumon.

**Second Biomarqueur**

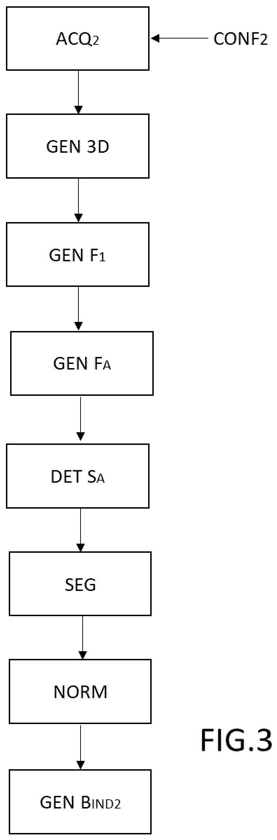

La figure 3 représente les principales étapes du second mode de réalisation de l'invention. Dans cette réalisation, une seconde configuration $CONF_2$ du système d'imagerie par IRM est réalisée. La seconde configuration $CONF_2$ permet de configurer une pondération de type $T_2$.

L'objectif de ce mode de réalisation est de générer un biomarqueur représentatif d'un volume de charge en mucus et/ou d'œdème au sein du volume pulmonaire. Un avantage de la pondération de type $T_2$ est de représenter le signal de l'image propre aux liquides stagnants, tels que l'eau, le mucus, le sang non circulant. A cette fin, le procédé de l'invention comporte une étape de filtrage de certains volumes pour isoler le volume représentatif de la charge de mucus.

La seconde configuration $CONF_2$ de l'acquisition $ACQ_2$ peut être avantageusement complétée par une acquisition complémentaire $ACQ_1$ d'une image en pondération $T_1$ ou une pondération en densité de protons. Cette acquisition complémentaire $ACQ_1$ permet notamment d'améliorer la segmentation du volume pulmonaire $V_P$, elle est préférentiellement configurée comme l'acquisition du premier mode de réalisation représenté à la figure 2.

**- Acquisition**

Selon le second mode de réalisation, la pondération $T_2$ est avantageusement réalisée avec un temps d'écho TE long et un temps de répétition TR considéré comme long. On rappelle que cette terminologie TE long, TE court, TR long, TR court est connu de l'homme de l'art qui saurait déterminer une configuration appropriée du système IRM en pondération $T_2$. Une configuration possible correspond à un temps d'écho : TE > 80 ms et un temps de répétition : TR > 2000 ms.

Cette acquisition $ACQ_2$ est, par exemple, réalisée en 2D ou 3D. Dans le premier cas, une étape de reconstruction d'une image 3D peut être réalisée par empilement de couches 2D. L'image tridimensionnelle obtenue, et éventuellement traitée, comporte alors une pluralité de voxels. Cette étape est représentée à la figure 3 par l'étape GEN 3D. Cette étape vise à générer une image tridimensionnelle à partir d'une acquisition 2D.

**- Acquisition RTSE**

Selon un mode de réalisation, l'acquisition en pondération $T_2$ est une séquence d'acquisition radiale dite « turbo spin écho » dans la terminologie anglo-saxonne. Elle est plus communément notée T2-RTSE.

Cette séquence T2-RTSE est une séquence 2D basée sur l'écho de spin avec une trajectoire radiale dans l'espace k. Lors de l'acquisition de données radiales, le centre de l'espace k est obtenu naturellement par un effet de moyennage résultant de la configuration de l'acquisition. Cette caractéristique permet d'améliorer les artefacts liés aux mouvements. L'immunité aux mouvements radiaux est renforcée par l'utilisation d'une technique d'acquisition, dite PACE, et désignant dans la terminologie anglo-saxonne : « Prospective Acquisition and CorrEction ».

Cette technique d'acquisition est compatible avec diverses séquences, dont la séquence RTSE. Elle permet notamment de supprimer certains des mouvements cinétiques, d'augmenter le ratio signal sur bruit.

L'acquisition T2-RTSE comprend une densité d'échantillonnage selon des anneaux de rayons croissants, les projections radiales des temps d'échos TEs voisins sont alors obtenus par une interpolation linéaire. Ce processus est réitéré jusqu'à ce que le rayon maximal soit atteint, par exemple, en utilisant un algorithme avec un pseudo-rapport d'angle d'or, par exemple décrit dans la publication : « Multi-Echo Pseudo-Golden Angle Stack of Stars Thermometry with High Spatial and Temporal Resolution Using k-Space Weighted Image Contrast ».

Plusieurs échos sont acquis et sont reconstruits à l'aide d'une méthode de hiérarchisation dans l'espace k qui préserve les contrastes des images acquises à chaque TE. Cette technique comprend ensuite la génération d'une image composite construite à partir de toutes les images acquises sur une pluralité de TE successifs, ainsi que la reconstruction de l'image en pondération $T_2$ à partir d'acquisitions d'écho multiples.

Selon un exemple, les temps d'échos TE successifs se succèdent avec des durées croissantes. Selon un exemple, le signal est acquis sur 5 TE, par exemple ayant des valeurs respectives de : 20 ms, 50 ms, 85 ms, 100 ms et 150 ms.

L'utilisation de longs temps d'écho TE allant jusqu'à 150 ms permet d'améliorer la suppression des signaux provenant des volumes sanguins circulant dans les vaisseaux. Cette fonction de suppression des signaux provenant des volumes sanguins circulant peut être améliorée par une acquisition avec une saturation spatiale et/ou une double inversion récupération, et/ou un module de diffusions. La double inversion récupération est une séquence IRM, notée DIR et connue de l'homme de l'art. Inversement, les liquides non circulant ayant des TE de durées courtes à des durées intermédiaires pourraient être effacés sur des TE long. La disponibilité de TE courts dans l'image composite reconstruite sur l'ensemble des TE est donc de nature à permettre de ne pas perdre l'information des TE courts. Ainsi, une acquisition multi-TE permet un compromis optimal entre la visualisation efficace des liquides non circulant et l'effacement des parties molles ou les vaisseaux circulants.

Avantageusement, la seconde configuration $CONF_2$ du système d'imagerie IRM comprend un paramétrage des temps TR et TE. Un paramétrage adapté permet de contribuer à une acquisition visant à supprimer les volumes circulants, par exemple les volumes des vaisseaux sanguins. En effet, le paramètre TR permet de contrôler le phénomène d'entrée de coupe des protons et le TE permet de contrôler le phénomène de sortie de coupe des protons. Dans une configuration d'acquisition en écho de spin, le signal acquis baisse rapidement lorsque les vitesses circulatoires augmentent. En effet, les protons circulants ne sont pas rephasés.

Le phénomène est encore plus marqué lorsque l'on paramètre des temps TE longs, car la quasi-totalité des protons excités sont sortis de la coupe lorsque le signal est recueilli. Du fait de l'utilisation d'une séquence d'écho de spin, l'intensité du signal des vaisseaux est rendue faible. Notamment, l'utilisation de TE longs allant jusqu'à 150 ms, ainsi que la saturation spatiale en amont de chaque train d'écho, permettent de supprimer davantage l'intensité du signal des vaisseaux en circulation.

La seconde configuration $CONF_2$ comporte, en outre, avantageusement une pré-saturation ou une saturation. Cette technique est fondée, par exemple, sur le choix d'une fréquence émise qui peut être mise en œuvre par l'émission d'une impulsion radiofréquence. Cette impulsion permet d'annuler l'aimantation longitudinale des protons. L'impulsion est avantageusement émise sous la forme d'une pré-impulsion avant chaque cycle de TE. L'impulsion de radiofréquence disperse les phases des spins sans être suivie par un gradient de rephasage mais avec un spoiler qui élimine l'aimantation résiduelle. Par exemple, une bande de pré-saturation placée en amont d'une pile de coupes permet de brouiller l'aimantation des protons susceptible de rentrer dans la coupe. Le signal de ces protons sera donc réduit, voire nul, sans quoi ils seraient susceptibles d'avoir un signal détectable en l'absence de pré-saturation. Cette configuration permet de diminuer ou de supprimer les flux circulants. En conséquence, le procédé de l'invention comporte une étape visant à annuler le signal des protons qui bougent et à conserver le signal des protons qui ne bougent pas. Cette opération peut donc être réalisée grâce à une configuration de la saturation du signal.

Selon un exemple de réalisation, les paramètres suivants peuvent être définis pour établir la seconde configuration $CONF_2$ : TE reconstitués = 20, 50, 85, 100 et 150 ms, TR = 2350 ms, angle de bascule = 145 °, taille du pixel = 1,6 x 1,6 mm2, épaisseur de la coupe = 1,6 mm, aucun entrelacement, temps d'acquisition moyen = 12 minutes.

Selon cet exemple, l'image 3D peut être construite dans un second temps par empilement d'images 2D. Un volume composé de voxels isotropes, par exemple de dimension : {1,6 mm}$^3$ peut alors être obtenu.

- **Acquisition complémentaire en pondération $T_1$ ou densité de protons**

Lorsqu'une seconde acquisition IRM est réalisée en pondération $T_1$ ou en pondération de protons afin de segmenter l'enveloppe du volume pulmonaire $V_P$, la configuration en pondération $T_1$ peut comprendre, par

exemple, un temps d'écho : TE = 10 à 20 ms et un temps de répétition : TR = 400 à 600 ms. Cette seconde acquisition IRM peut être volumique, c'est-à-dire que l'image obtenue est directement une image tridimensionnelle. Cette configuration est alors sensiblement proche de la configuration $CONF_1$ du premier mode de réalisation. Cette dernière configuration peut être réalisée en définissant un temps d'écho ultracourt UTE ou bien une séquence Zéro TE.

L'acquisition de l'image en pondération $T_1$ ou en pondération de protons est alors recalée avec l'image acquise en pondération $T_2$. Les contours du volume pulmonaire $V_P$ extraits de l'acquisition en pondération $T_1$ peuvent être recalés sur l'image de l'acquisition en pondération $T_2$ pour segmenter le volume pulmonaire $V_P$ de l'image de l'acquisition en pondération $T_2$.

Un avantage de ce recalage est de permettre de récupérer le contour du volume pulmonaire dont le contraste a été diminué du fait du traitement du volume sanguin circulant.

Selon un autre exemple, une séquence avec TR = 4,1 ms, TE = 0,05 ms et un angle d'inclinaison = 5 ° peut être définie.

Identiquement, l'image acquise par cette seconde acquisition IRM en pondération $T_1$ peut être traitée par des algorithmes de traitement d'image afin de réduire le bruit, supprimer des artefacts ou encore adapter une échelle de contraste.

- **Extraction du volume pulmonaire**

Les images tridimensionnelles obtenues à partir de la première acquisition en pondération $T_2$ et à partir de la seconde acquisition en pondération $T_1$ peuvent être superposées de manière à filtrer les voxels de l'image à l'intérieur du volume pulmonaire $V_P$. Enfin, cette acquisition en pondération $T_1$ permet également de détourer le volume du cœur et de le soustraire au volume d'intérêt.

L'objectif de l'acquisition en pondération $T_1$ ou en densité de protons est de réaliser un masque de l'enveloppe pulmonaire. Pour réaliser ce masque 3D, l'acquisition 3D UTE est interpolée pour correspondre à la résolution spatiale de l'acquisition T2-RTSE. Selon un exemple, les images ont été enregistrées en utilisant un algorithme optimisé multimodal basé sur l'intensité. Un algorithme itératif pour sélectionner le seuil optimal d'intensité peut être mis en œuvre. Cet algorithme calcule la moyenne des deux classes séparant l'image en arrière-plan et avant-plan. En outre, il calcule de façon itérative le meilleur seuil de séparation et s'arrête une fois que ce calcul ne change pas. Cet algorithme peut être basé sur la division de l'histogramme en deux images selon deux classes d'intensité de voxels afin de créer un masque pulmonaire. Ensuite, le masque pulmonaire est, par exemple, appliqué aux images enregistrées T2-RTSE afin d'isoler les voxels compris dans le volume pulmonaire $V_P$. D'autres techniques permettent d'acquérir un masque du volume pulmonaire. Par exemple, le masque peut être obtenu à partir d'un autre système d'imagerie ou à partir d'une image précédemment acquise et enregistrée dans une mémoire.

## - Première fonction F₁

Le procédé de l'invention comporte une étape visant à générer une première fonction de distribution $F_1$ d'une répartition de voxels de l'image acquise par l'acquisition en pondération $T_2$ en fonction de l'intensité du signal. Afin d'obtenir une fonction $F_1$ qui soit représentative d'une charge de mucus à l'intérieur du volume pulmonaire, une étape de détourage du volume pulmonaire $V_P$ est réalisée, par exemple, à partir d'une seconde acquisition en pondération $T_1$, comme énoncé précédemment. Par ailleurs, une étape de filtrage des voxels correspondant au liquide sanguin circulant dans les vaisseaux est également réalisée du fait du mode d'acquisition de l'image en pondération $T_2$ comme détaillé précédemment.

La première fonction $F_1$ permet donc de rendre compte de la distribution d'un paramètre colorimétrique, tel que l'intensité du signal, dans l'image représentative des volumes de liquide, tels que l'eau. La fonction $F_1$ permet donc de discriminer les volumes de mucus, qui sont formés sensiblement de 95% d'eau, ou les volumes stagnants d'œdème, qui sont formés sensiblement de 90% d'eau, dans le volume pulmonaire. L'intensité du signal est préférentiellement un paramètre de contraste.

Une fois la fonction $F_1$ générée, une courbe $C_1$ représentative de la distribution des voxels dans le volume pulmonaire est obtenue. La distribution des voxels est obtenue pour une échelle absolue de voxels dont la résolution dépend de la configuration de l'acquisition de l'image.

## - Seconde fonction F₂

Une fonction $F_2$ permettant de définir un seuil automatique permet d'extraire un volume filtré $V_F$ et volume caractéristique $V_C$. On rappelle que le volume filtré est le volume extrait de l'image segmentée correspondant à une zone d'intérêt. Le volume caractéristique Vc est un volume obtenu à partir du volume filtré de manière à générer le biomarqueur.

A cette fin, un volume de référence $V_A$ est identifié dans l'image acquise. Le volume de référence $V_A$ est préférentiellement choisi au niveau d'une zone aérienne, c'est-à-dire un volume correspondant à un volume d'air. Le volume de référence $V_A$ correspond à une zone de dimension minimale permettant d'être suffisamment représentative d'une zone correspondant à un volume d'air et non à un artefact de l'image ou une zone singulière. En d'autres termes, on choisit une zone suffisamment grande pour obtenir une valeur représentative du niveau de contraste de l'air. Ce volume de référence $V_A$ peut être automatiquement sélectionné à une position donnée à l'intérieur de l'enveloppe pulmonaire $V_P$ ou à une position donnée à l'extérieure de l'enveloppe pulmonaire $V_P$. Par exemple, une position à une distance prédéfinie de la limite de la surface de la cage thoracique permet d'obtenir une probabilité importante d'obtenir une zone aérienne. La distance peut être par exemple comprise entre 1 cm et 4 cm, préférentiellement entre 1,5 cm et 3 cm. Une distance de 2 cm permet d'être compatible d'un grand nombre de sujets. Le volume de référence $V_A$ permet de sélectionner une distribution d'un paramètre colorimétrique, c'est-à-dire par exemple une distribution des valeurs de l'intensité du signal, du volume de référence $V_A$, telle que les valeurs d'une distribution d'un niveau de contraste. La fonction représentant la distribution des voxels de ce volume de référence $V_A$ est dans ce mode de réalisation la seconde fonction $F_2$, également notée dans ce second mode de réalisation $F_A$.

Le procédé de l'invention comporte une étape visant à mesurer l'écart-type $\sigma_A$ de la seconde fonction $F_A$. L'écart-type $\sigma_A$ est calculé sur le volume de référence $V_A$. Le procédé de l'invention comprend ensuite le calcul d'un seuil de référence $S_A$ calculé à partir de l'écart-type calculé $\sigma_A$. Selon un mode de réalisation, le seuil de référence $S_A$ est un multiple de l'écart-type $\sigma_A$. Selon un exemple, la valeur du seuil de référence $S_A$ est comprise entre 8 et 16 fois la valeur de l'écart-type $\sigma_A$ à laquelle est ajoutée la valeur du mode principal de la distribution des voxels du parenchyme pulmonaire A cet effet, un volume de base $V_B$ de voxels est automatiquement sélectionné dans la zone du poumon. Ce volume de base $V_B$ peut être prédéfini, par exemple à une distance minimale de l'enveloppe du poumon, ou encore être déterminé autour d'une zone d'intérêt. La zone d'intérêt peut être définie à proximité ou au voisinage des bronchioles respiratoires, des conduits alvéolaires et des alvéoles. Selon un cas d'exemple, l'ensemble du volume de chaque poumon est considéré. Selon un autre exemple, différents volumes de base $V_B$ sont calculés en différents endroits et une valeur moyenne est ensuite générée. Selon un autre exemple, le procédé est répété pour différents volumes de base $V_B$. Le mode principal du volume de base $V_B$ est alors noté $M_B$.

Le mode principal représente la valeur de la plus grande distribution du paramètre colorimétrique ou des valeurs de l'intensité du signal, il est noté $M_B$. Ce mode principal permet de générer un seuil adaptatif qui dépend du patient et de ses données physiologiques propres. Ceci constitue un réel avantage de l'invention afin de mesurer et quantifier le volume de mucus relativement à un individu. Afin d'obtenir un volume filtré discriminant un volume de charge de mucus, la valeur du seuil de référence $S_A$ est comprise entre 10 et 14 fois la valeur de l'écart-type $\sigma_A$ à laquelle on ajoute le mode principal $M_B$. Selon un exemple préféré, la valeur du seuil de référence $S_A$ est définie entre 11 et 13 fois la valeur de l'écart-type $\sigma_A$ à laquelle on ajoute le mode principal $M_B$. En particulier, la valeur du seuil de référence $S_A = 12 \cdot \sigma_A + M_B$.

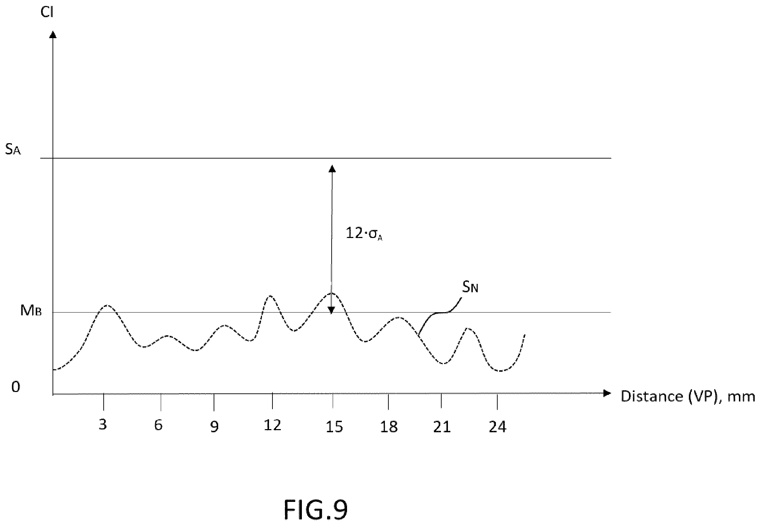

La figure 9 représente un exemple de seuil $S_A$ calculé à partir d'un mode principal obtenu à partir de la répartition la plus représentative du signal du volume pulmonaire $V_P$. En ordonnée CI figure l'intensité du signal acquis en $T_2$ et en abscisse figure une métrique de distance propre à l'image en coupe représentée. La distance « Distance (VP) » est exprimée en millimètre et correspond à la distance depuis l'enveloppe du poumon jusqu'à une autre extrémité du poumon.

Selon un premier exemple, la fonction Distance (VP) est définie au moyen d'un segment de droite défini à partir d'un premier point situé sur la paroi du volume pulmonaire, d'une normale à la paroi et d'un second point défini à l'intersection de la paroi pulmonaire opposée au premier point.

Selon un autre exemple, la fonction distance (VP) est définie à partir d'un segment de droite défini à partir d'un premier point situé sur la paroi du volume pulmonaire et qui passe par un centre du volume pulmonaire. Le centre du volume pulmonaire est un centre fictif pouvant être défini à partir d'une fonction géométrique, telle qu'une fonction déterminant un barycentre, appliquée à l'enveloppe du volume pulmonaire $V_P$.

Selon un autre exemple, la fonction Distance (VP) est définie en considérant un segment compris entre deux points considérés sur la paroi du volume pulmonaire.

Le mode principal $M_B$ peut également être calculé au sein d'un volume partiel du volume pulmonaire $V_P$.

Le signal $S_N$ correspond à l'intensité du signal dans une image de coupe (2D). Il est donc mesuré à partir d'une distance de l'enveloppe du poumon. Le seuil $S_A$ est obtenu par un calcul du mode principal $M_B$, ici représenté à titre indicatif sur la répartition des intensités du signal d'une coupe. Afin d'obtenir le seuil $S_A$, il a été ajouté au mode principal un multiple de l'écart-type du signal mesuré sur un volume de référence de l'air pris en dehors du volume pulmonaire, typiquement entre 12 et 16 fois.

- **Segmentation**

Le procédé comporte une étape de segmentation du volume des voxels supérieur au seuil $S_A$. Le volume obtenu est le volume filtré $V_F$. Ce volume filtré permet de conserver le voxel d'intensité élevé et permet d'éliminer une partie du signal correspondant à du bruit.

Selon un mode de réalisation, la fonction $F_A$, c'est-à-dire la seconde fonction $F_2$, définit un filtre de la fonction $F_1$. Le filtre est appliqué de manière à extraire les voxels filtrés par la fonction $F_A$, c'est à-dire ceux pour lesquels les voxels ont un niveau de contraste supérieur au seuil $S_A$. Dans ce cas, la fonction $F_A$ définit un masque appliqué à la fonction $F_1$.

Le volume filtré $V_F$ est défini par le volume composé des voxels de la distribution de la fonction $F_1$ filtrée par le seuil de référence $S_A$. Les voxels du volume filtré ont donc une intensité de contraste supérieure au seuil de référence $S_A$. Un intérêt est d'obtenir la valeur d'intensité en pondération $T_2$ des zones de mucus présentent dans le volume pulmonaire. La fonction $F_2$ agit comme un masque volumétrique filtrant les hautes intensités de signal acquises.

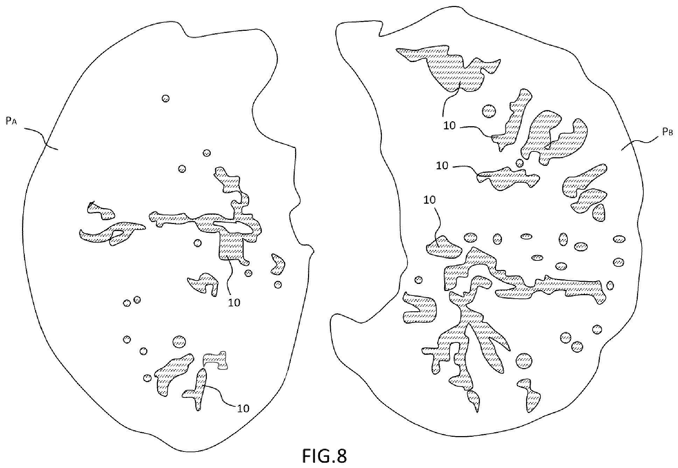

La figure 8 représente un exemple d'une coupe des deux lobes pulmonaires $P_A$, $P_B$ dans laquelle sont représentées des zones 10 en 2D correspondant à des parties de volume de zone d'intensité supérieur au seuil $S_A$. Ainsi, la figure 8 représente un exemple d'un volume filtré par la fonction $F_2$.

Le procédé comprend une étape de normalisation des valeurs de voxels du volume filtré $V_F$. Selon une première variante de réalisation, les valeurs d'intensité de contraste sont normalisées sur une échelle comprise, par exemple, entre 0 et 1.

Selon une autre variante de réalisation, qui peut être combinée ou réalisée en alternative à la première variante, la normalisation comprend le calcul d'un indice d'intensité volumétrique noté VIP. Cet indice VIP est obtenu par un produit entre le volume et l'intensité $T_2$ du signal. Il permet de quantifier l'intensité volumique des hypersignaux et donc de quantifier des niveaux d'inflammation. Il permet, en outre, de quantifier l'évolution d'une zone par la corrélation entre l'augmentation ou la diminution d'un volume de zone inflammée et l'augmentation ou la diminution d'une intensité de signal.

La normalisation comprend donc une normalisation des valeurs absolues des paramètres colorimétriques ou de l'intensité du signal des voxels, ici exprimés par la quantification du signal $T_2$, par exemple exprimés en ms et d'un seuil de filtrage correspondant au masque du volume filtré appliqué, grâce au seuil $S_A$.

Selon un exemple, l'indice VIP peut s'exprimer en millisecondes et résulter de l'équation suivante :

$$\text{VIP} = \frac{\sum_i^{max} T2ixHSVi}{VP}$$

- i correspond à une valeur de $T_2$, à cette fin une distribution de valeurs du signal en $T_2$ est réalisée ;
- max correspond à la valeur maximale du signal en $T_2$.
- T2i représente le signal de niveau i de l'image tridimensionnelle ;
- $HSV_i$ correspond au volume associé au niveau de valeur de $T_2$ de la distribution, ledit volume étant compris dans le masque de l'image tridimensionnelle correspondant au volume filtré $V_F$ des hautes intensités de signaux en $T_2$ ;
- $V_P$ correspond au volume pulmonaire.

Un avantage est d'obtenir une valeur normalisée par un indice reflétant une intensité par unité de volume. Compte tenu du seuil adaptatif obtenu grâce au seuil $S_A$, le procédé de l'invention permet la génération d'un biomarqueur qui soit exploitable en limitant la variabilité de l'exploitation et de l'interprétation des images d'un individu à un autre. Par ailleurs, ce biomarqueur permet d'obtenir des points de références temporels pour mesurer l'évolution dans le temps du développement du mucus.

Selon un mode de réalisation, une étape comportant la fusion des images UTE et RTSE est réalisée. Une fusion des images morphologiques à haute résolution obtenues à l'aide d'une séquence à temps d'écho ultra court UTE, et le masque du volume des hypersignaux $T_2$ segmentés, est dans ce cas réalisée afin de combiner les deux informations. Cette technique peut être appliquée par l'homme de l'art en PET-TDM.

## Revendications

1. Procédé de génération d'un biomarqueur comportant :

   ■ acquisition (ACQ) d'une image par un système IRM ;
   ■ traitement de ladite image IRM pour générer (GEN 3D) une image tridimensionnelle du poumon ;
   ■ génération (GEN $F_1$) d'une première fonction ($F_1$) correspondant à la distribution des différentes valeurs de l'intensité du signal de chaque voxel d'une portion de l'image tridimensionnelle acquise ;
   ■ calcul automatique (DET_S) d'au moins un seuil de filtrage ($S_A$, $S_1$, $S_2$) de ladite première fonction ($F_1$) à partir d'au moins une seconde fonction ($F_2$, $F_A$, $Fg_1$, $F_{g2}$) de distribution de différentes valeurs d'intensité du signal de chaque voxel d'une portion de l'image tridimensionnelle acquise ;
   ■ segmentation (SEG) d'un volume comportant :

      ○ Un volume principal ($V_P$), correspondant au volume pulmonaire ;
      ○ Un volume filtré ($V_F$) d'un volume de voxels quantifiés par la première fonction ($F_1$) et filtré au moyen d'au moins du seuil de filtrage ($S_A$, $S_1$) calculé, normalisation des valeurs des valeurs des voxels du volume filtré

   **caractérisé en ce que** :

      ■ l'acquisition (ACQ) d'une image tridimensionnelle par un système IRM est configurée par :

         ○ une pondération en $T_2$ ;
         ○ un temps d'écho (TE) supérieur à seuil prédéfini ;

      ■ le calcul automatique d'au moins un seuil de filtrage ($S_A$) comprend :

         ○ acquisition d'un volume de référence ;
         ○ génération d'une fonction de référence ($F_A$) correspondant à une distribution des différentes valeurs de l'intensité du signal de chaque voxel du volume de référence ($V_{AIR}$), ladite fonction de référence ($F_A$) étant la seconde fonction de distribution ($F_A$) ;
         ○ calcul de l'écart-type ($\sigma_A$) de la fonction de référence ($F_A$) ;
         ○ détermination d'un seuil de filtrage, dit seuil de référence ($S_A$) à partir de l'écart-type calculé de la fonction de référence ($F_A$).

2. Procédé de génération d'un biomarqueur selon la revendication 1, **caractérisé en ce que** l'acquisition est paramétrée et comprend :

   ■ une acquisition d'une image recomposée d'une pluralité d'images acquises sur un nombre de cycle(s) d'au moins 4 temps d'écho (TE), les temps d'échos étant configurés selon des durées croissantes ;
   ■ une séquence Echo de spin ;
   ■ un paramétrage visant à émettre un signal pour pré-saturer ou une saturer du signal acquis.

3. Procédé de génération d'un biomarqueur selon l'une quelconque des revendications 1 à 2, **caractérisé en ce qu'**une seconde acquisition ($ACQ_2$) de l'image est réalisée avec une première configuration ($Conf_1$) pour détourer le volume pulmonaire ($V_P$), la première configuration ($CONF_1$) définissant un paramétrage d'une acquisition en pondération $T_1$ ou en densité de protons, une étape de traitement d'image étant réalisée pour combiner l'image acquise en pondération $T_2$ avec l'image acquise par la seconde acquisition ($ACQ_2$).

4. Procédé de génération d'un biomarqueur selon la revendication 3, **caractérisé en ce qu'**une opération de fusion entre au moins une image acquise en pondération $T_1$ avec un temps d'écho ultra court UTE et au moins une image acquise par une pondération $T_2$ est réalisée pour générer une image dont les données provenant de chacune des images acquises ont été combinées pour segmenter le volume pulmonaire.

5. Procédé de génération d'un biomarqueur selon l'une quelconque des revendications 1 à 3, **caractérisé en ce que** le seuil de référence ($S_A$) est établi à partir d'une combinaison entre une valeur de répartition de référence de la fonction de référence ($F_A$) et une valeur comprise entre 10 et 20 fois la valeur de l'écart-type ($\delta_A$) de la fonction de référence ($F_A$).

6. Procédé de génération d'un biomarqueur selon la revendication 5, **caractérisé en ce que** la valeur de répartition de référence de la fonction de référence ($F_A$) est le mode principal ($M_B$) de la répartition des valeurs d'intensité du signal de l'image acquise en pondération $T_2$ au sein du volume pulmonaire ($V_P$).

7. Procédé de génération d'un biomarqueur selon l'une quelconque des revendications 1 à 6, **caractérisé en ce que** la normalisation comprenant le calcul d'un indice volumique du signal (VIP) à partir des valeurs absolues du signal du volume filtré ($V_F$), du volume résultant du volume filtré ($V_F$) et du volume pulmonaire ($V_P$).

8. Procédé de génération d'un biomarqueur comportant :

   ▪ acquisition (ACQ) d'une image par un système IRM ;
   ▪ traitement de ladite image IRM pour générer (GEN 3D) une image tridimensionnelle du poumon ;
   ▪ génération (GEN $F_1$) d'une première fonction ($F_1$) correspondant à la distribution des différentes valeurs de l'intensité du signal de chaque voxel d'une portion de l'image tridimensionnelle acquise ;
   ▪ calcul automatique (DET_S) d'au moins un seuil de filtrage ($S_A$, $S_1$, $S_2$) de ladite première fonction ($F_1$) à partir d'au moins une seconde fonction ($F_2$, $F_A$, $Fg_1$, $F_{g2}$) de distribution de différentes valeurs d'intensité du signal de chaque voxel d'une portion de l'image tridimensionnelle acquise ;
   ▪ segmentation (SEG) d'un volume comportant :

      ○ Un volume principal ($V_P$), correspondant au volume pulmonaire ;
      ○ Un volume filtré ($V_F$) d'un volume de voxels quantifiés par la première fonction ($F_1$) et filtré au moyen d'au moins du seuil de filtrage ($S_A$, $S_1$) calculé

   dans lequel
   ▪ l'acquisition (ACQ) d'une image tridimensionnelle par un système IRM, est configurée par :

      ○ une pondération en densité de proton (TR long ou TE long) ou en $T_1$, le temps d'écho (TE) (TR court, TE court)
      ○ un temps d'écho inférieur à seuil prédéfini ;

   ▪ le calcul automatique d'au moins un seuil de filtrage ($S_1$, $S_2$) comprend :

      ○ modélisation (MODEL) d'au moins deux fonctions gaussiennes ($Fg_1$, $Fg_2$) par ajustement de la première fonction ($F_1$) ;
      ○ détermination du seuil de filtrage, dit premier seuil, par un calcul de l'intersection de la première fonction gaussienne ($Fg_1$) et de la seconde fonction gaussienne ($Fg_2$) ;
      ○ détermination d'un second seuil ($S_2$) correspondant à une valeur minimale de la première fonction gaussienne ($Fg_1$) et une valeur minimale d'une valeur de l'intensité du signal d'un voxel ;

   ▪ le volume filtré ($V_F$) est un premier volume ($V_1$) correspondant aux voxels quantifiés ($Q_1$) par la première fonction gaussienne ($Fg_1$) comprise entre le premier seuil ($S_1$) et le second seuil ($S_2$), lesdits voxels correspondant à un milieu aérien,
   le procédé comprenant en outre :

      ▪ normalisation des valeurs de l'image tridimensionnelle du volume pulmonaire ($V_P$) à partir des valeurs absolues des valeurs d'intensité du signal des voxels de l'image, du premier seuil ($S_1$) et du second seuil ($S_2$) calculés ($S_1$, $S_2$) ;
      ▪ génération d'un biomarqueur ($B_{IND1}$) indiquant un ratio d'un volume caractéristique (Vc) du volume segmenté normalisé, ledit ratio étant calculé entre le volume caractéristique (Vc) et le volume pulmonaire ($V_P$),

   **caractérisé par**
   l'acquisition étant une acquisition 4D configurée pour acquérir sur une durée prédéfinie une variation du biomarqueur par unité de temps.

9. Procédé de génération d'un biomarqueur selon l'une quelconque des revendications 1 à 8, **caractérisé en ce que** le procédé comprend l'acquisition (ACQ) des valeurs de l'intensité du signal de chaque voxel quantifiées par la première fonction ($F_1$), les valeurs d'intensité correspondant à une donnée de contraste d'image.

10. Procédé de génération d'un biomarqueur selon l'une quelconque des revendications 1 à 8, **caractérisé en ce que** l'acquisition (ACQ) est réalisée de manière synchronisée avec un respirateur, le respirateur étant un navigateur ou une ceinture respiratoire.

11. Procédé de génération d'un biomarqueur ($B_{IND}$) selon l'une quelconque des revendications 1 à 10, **caractérisé en ce qu'**une étape d'extraction d'une image volumétrique est réalisée à partir des images acquises par l'IRM, ladite image extraite étant réalisée à un instant déterminé de la séquence.

**12.** Procédé de génération d'un biomarqueur ($B_{IND}$) selon l'une quelconque des revendications 1 à 11, **caractérisé en ce que** l'acquisition (ACQ) de l'image tridimensionnelle est réalisée au moyen d'un empilement d'images 2D acquises, l'épaisseur de la coupe étant égale au moins à la largeur d'un voxel.

**13.** Procédé de génération d'un biomarqueur selon la revendication 8,, **caractérisé en ce que** l'acquisition 4D est configurée pour acquérir un volume de voxels sur une unité de temps correspondant à une durée d'un cycle respiratoire, ladite acquisition étant synchronisée avec une donnée caractéristique d'une inspiration et/ou d'une expiration.

**14.** Système comportant au moins un calculateur et une mémoire et une interface pour recevoir une image acquise par un système IRM, ledit système étant configuré pour mettre en œuvre les étapes du procédé de l'une quelconque des revendications 1 à 13.

**Patentansprüche**

**1.** Verfahren zur Generierung eines Biomarkers, umfassend:

- Bilderfassung (ACQ) mit einem MRT-System;
- Verarbeitung des MRT-Bildes zur Generierung (GEN 3D) eines dreidimensionalen Bildes der Lunge;
- Generierung (GEN $F_1$) einer ersten Funktion ($F_1$), die der Verteilung der verschiedenen Werte der Signalintensität jedes Voxels eines Teils des erfassten dreidimensionalen Bildes entspricht;
- Automatische Berechnung (DET_S) mindestens einer Filterschwelle ($S_A$, $S_1$, $S_2$) der ersten Funktion ($F_1$) aus mindestens einer zweiten Funktion ($F_2$, $F_A$, $Fg_1$, $F_{g2}$) zur Verteilung verschiedener Signalintensitätswerte jedes Voxels eines Teils des erfassten dreidimensionalen Bildes;
- Segmentierung (SEG) eines Volumens umfassend:

  ○ Ein Hauptvolumen ($V_P$), das dem Lungenvolumen entspricht;
  ○ Ein gefiltertes Volumen ($V_F$) eines Volumens von Voxeln, das durch die erste Funktion ($F_1$) quantifiziert und mittels mindestens der berechneten Filterschwelle ($S_A$,

$S_1$) gefiltert wird, Normalisierung der Werte der Voxelwerte des gefilterten Volumens

**dadurch gekennzeichnet, dass**:

- Die Erfassung (ACQ) eines dreidimensionalen Bildes durch ein MRT-System wie folgt konfiguriert wird:

  ○ Eine $T_2$-Gewichtung;
  ○ Eine Echozeit (TE) über einem vordefinierten Schwellenwert;

- Die automatische Berechnung mindestens einer Filterschwelle ($S_A$) umfasst:

  ○ Erfassen eines Referenzvolumens;
  ○ Generieren einer Referenzfunktion ($F_A$), die einer Verteilung der verschiedenen Werte der Signalintensität jedes Voxels des Referenzvolumens ($V_{AIR}$) entspricht, wobei die Referenzfunktion ($F_A$) die zweite Verteilungsfunktion ($F_A$) ist;
  ○ Berechnung der Standardabweichung ($\sigma_A$) der Referenzfunktion ($F_A$);
  ○ Ermittlung einer Filterschwelle, der sogenannten Referenzschwelle ($S_A$) aus der berechneten Standardabweichung der Referenzfunktion ($F_A$).

**2.** Verfahren zur Generierung eines Biomarkers nach Anspruch 1, **dadurch gekennzeichnet, dass** die Erfassung parametriert ist und umfasst:

- Erfassen eines Bildes, das aus mehreren Bildern zusammengesetzt ist, die über eine Anzahl von Zyklen mit mindestens 4 Echozeiten (TE) erfasst wurden, wobei die Echozeiten nach steigenden Zeiten konfiguriert sind;
- Eine Spin-Echo-Sequenz;
- Eine Parametrierung zur Ausgabe eines Signals zur Vorsättigung oder Sättigung des erfassten Signals.

**3.** Verfahren zur Generierung eines Biomarkers nach einem der Ansprüche 1 bis 2, **dadurch gekennzeichnet, dass** eine zweite Erfassung ($ACQ_2$) des Bildes mit einer ersten Konfiguration ($CONF_1$) durchgeführt wird, um das Lungenvolumen ($V_P$) abzuleiten, wobei die erste Konfiguration ($CONF_1$) eine Parametrierung einer Erfassung in $T_1$-Gewichtung oder in Protonendichte definiert, wobei ein Bildverarbeitungsschritt durchgeführt wird, um das durch $T_2$-Gewichtung erfasste Bild mit dem durch die zweite Erfassung erfassten Bild ($ACQ_2$) zu kombinieren.

**4.** Verfahren zur Generierung eines Biomarkers nach Anspruch 3, **dadurch gekennzeichnet, dass** ein Fusionsvorgang zwischen mindestens einem durch $T_1$-Gewichtung erfassten Bild mit ultrakurzer Echozeit UTE und mindestens einem durch $T_2$-Gewichtung erfassten Bild durchgeführt wird, um ein Bild zu generieren, dessen Daten aus jedem der erfassten Bilder kombiniert wurden, um das Lungenvolumen zu segmentieren.

5. Verfahren zur Generierung eines Biomarkers nach einem der Ansprüche 1 bis 3, **dadurch gekennzeichnet, dass** die Referenzschwelle ($S_A$) aus einer Kombination aus einem Referenzverteilungswert der Referenzfunktion ($F_A$) und einem Wert zwischen dem 10- und 20-fachen Wert der Standardabweichung ($\sigma_A$) der Referenzfunktion ($F_A$) ermittelt wird.

6. Verfahren zur Generierung eines Biomarkers nach Anspruch 5, **dadurch gekennzeichnet, dass** der Referenzverteilungswert der Referenzfunktion ($F_A$) der Hauptmodus ($M_B$) der Verteilung der Intensitätswerte des als $T_2$-Gewichtung erfassten Bildsignals innerhalb des Lungenvolumens ($V_P$) ist.

7. Verfahren zur Generierung eines Biomarkers nach einem der Ansprüche 1 bis 6, **dadurch gekennzeichnet, dass** die Normalisierung die Berechnung eines Signalvolumenindex (VIP) aus den absoluten Signalwerten des gefilterten Volumens ($V_F$), des Volumens, das sich aus dem gefilterten Volumen ($V_F$) und dem Lungenvolumen ($V_P$) ergibt, umfasst.

8. Verfahren zur Generierung eines Biomarkers, umfassend:

   - Bilderfassung (ACQ) mit einem MRT-System;
   - Verarbeitung des MRT-Bildes zur Generierung (GEN 3D) eines dreidimensionalen Bildes der Lunge;
   - Generierung (GEN $F_1$) einer ersten Funktion ($F_1$), die der Verteilung der verschiedenen Werte der Signalintensität jedes Voxels eines Teils des erfassten dreidimensionalen Bildes entspricht;
   - Automatische Berechnung (DET_S) mindestens einer Filterschwelle ($S_A$, $S_1$ $S_2$) der ersten Funktion ($F_1$) aus mindestens einer zweiten Funktion ($F_2$, $F_A$, $Fg_1$, $F_{g2}$) zur Verteilung verschiedener Signalintensitätswerte jedes Voxels eines Teils des erfassten dreidimensionalen Bildes;
   - Segmentierung (SEG) eines Volumens umfassend:

     ◦ Ein Hauptvolumen ($V_P$), das dem Lungenvolumen entspricht;
     ◦ Ein gefiltertes Volumen ($V_F$) eines Volumens von Voxeln, das durch die erste Funktion ($F_1$) quantifiziert und mittels mindestens der berechneten Filterschwelle ($S_A$, $S_1$) gefiltert wird

in dem:

   - Die Erfassung (ACQ) eines dreidimensionalen Bildes durch ein MRT-System konfiguriert wird durch:

     ◦ eine Gewichtung in Protonendichte (TR lang oder TE lang) oder in $T_1$, die Echozeit (TE) (TR kurz, TE kurz)
     ◦ eine Echozeit unter einem vordefinierten Schwellenwert;

   - Die automatische Berechnung mindestens einer Filterschwelle ($S_1$, $S_2$) umfasst:

     ◦ Modellierung (MODEL) von mindestens zwei Gaußfunktionen ($Fg_1$, $Fg_2$) durch Anpassung der ersten Funktion ($F_1$);
     ◦ Bestimmung der Filterschwelle, der sogenannten ersten Schwelle, durch Berechnung des Schnittpunkts der ersten Gaußfunktion ($Fg_1$) und der zweiten Gaußfunktion ($Fg_2$);
     ◦ Bestimmung einer zweiten Schwelle ($S_2$), die einem Mindestwert der ersten Gaußfunktion ($Fg_1$) und einem Mindestwert eines Wertes der Signalintensität eines Voxels entspricht;

   - Das gefilterte Volumen ($V_F$) ist ein erstes Volumen ($V_1$), das den Voxeln ($Q_1$) entspricht, die durch die erste Gaußfunktion ($Fg_1$) zwischen dem ersten Schwellenwert ($S_1$) und dem zweiten Schwellenwert ($S_2$) quantifiziert werden, wobei die Voxel einem Luftmedium entsprechen,

Verfahren, ferner umfassend:

   - Normalisierung der Werte des dreidimensionalen Bildes des Lungenvolumens ($V_P$) aus den absoluten Werten der berechneten Voxelsignalintensitätswerte des Bildes, der ersten Schwelle ($S_1$) und der zweiten Schwelle ($S_2$) ($S_1$, $S_2$);
   - Generierung eines Biomarkers ($B_{IND1}$), der ein Verhältnis eines charakteristischen Volumens (Vc) des normalisierten segmentierten Volumens angibt, wobei das Verhältnis zwischen dem charakteristischen Volumen (Vc) und dem Lungenvolumen ($V_P$) berechnet wird,

**dadurch gekennzeichnet, dass** die Erfassung eine 4D-Erfassung ist, die so konfiguriert ist, dass sie über einen vordefinierten Zeitraum eine Veränderung des Biomarkers pro Zeiteinheit erfasst.

9. Verfahren zur Generierung eines Biomarkers nach einem der Ansprüche 1 bis 8, **dadurch gekennzeichnet, dass** das Verfahren das Erfassen (ACQ) der durch die erste Funktion ($F_1$) quantifizierten Werte der Signalintensität jedes Voxels umfasst, wobei die Intensitätswerte einem Bildkontrastwert entsprechen.

10. Verfahren zur Generierung eines Biomarkers nach einem der Ansprüche 1 bis 8, **dadurch gekennzeichnet, dass** die Erfassung (ACQ) synchron mit einem Beatmungsgerät durchgeführt wird, wobei das Beatmungsgerät ein Navigator oder ein Atemgurt ist.

11. Verfahren zur Generierung eines Biomarkers ($B_{IND}$) nach einem der Ansprüche 1 bis 10, **dadurch gekennzeichnet, dass** ein Schritt zur Extraktion eines volumetrischen Bildes aus den von der MRT erfassten Bildern durchgeführt wird, wobei das extrahierte Bild zu einem bestimmten Zeitpunkt der Sequenz erstellt wird.

12. Verfahren zur Generierung eines Biomarkers ($B_{IND}$) nach einem der Ansprüche 1 bis 11, **dadurch gekennzeichnet, dass** die Erfassung (ACQ) des dreidimensionalen Bildes mittels eines Stapels von erfassten 2D-Bildern erfolgt, wobei die Schnittdicke mindestens der Breite eines Voxels entspricht.

13. Verfahren zur Generierung eines Biomarkers nach Anspruch 8, **dadurch gekennzeichnet, dass** die 4D-Erfassung so eingerichtet ist, dass sie ein Voxelvolumen über eine Zeiteinheit erfasst, die einer Dauer eines Atemzyklus entspricht, wobei die Erfassung mit einem charakteristischen Merkmal einer Ein- und/oder Ausatmung synchronisiert ist.

14. System, das mindestens einen Rechner und einen Speicher und eine Schnittstelle zum Empfang eines von einem MRT-System erfassten Bildes umfasst, wobei das System so konfiguriert ist, dass es die Verfahrensschritte nach einem der Ansprüche 1 bis 13 durchführt.

**Claims**

1. Method for generating a biomarker comprising:

   ▪ acquiring (ACQ) an image using an MRI system;

   ▪ processing said MRI image to generate (GEN 3D) a three-dimensional image of the lung;
   ▪ generating (GEN $F_1$) a first function ($F_1$) corresponding to the distribution of the different signal intensity values of each voxel of a portion of the acquired three-dimensional image;
   ▪ automatically calculating (DET_S) at least one filtering threshold ($S_A$, $S_1$, $S_2$) of said first function ($F_1$) from at least one second different signal intensity value distribution function ($F_2$, $F_A$, $Fg_1$, $F_{g2}$) of each voxel of a portion of the acquired three-dimensional image;
   ▪ segmenting (SEG) a volume comprising:

      ○ A main volume ($V_P$), corresponding to the lung volume;
      ○ A filtered volume ($V_F$) of a volume of voxels quantified by the first function ($F_1$) and filtered by means of at least the calculated filtering threshold ($S_A$, $S_1$),

   **characterized in that** :

   ▪ the acquisition (ACQ) of a three-dimensional image by an MRI system is configured by:

      ○ a $T_2$ weighting;
      ○ an echo time (TE) greater than a predefined threshold;

   ▪ the automatic calculation of at least one filtering threshold ($S_A$) comprises:

      ○ acquiring a reference volume;
      ○ generating a reference function ($F_A$) corresponding to a distribution of the different signal intensity values of each voxel of the reference volume ($V_{AIR}$), said reference function ($F_A$) being the second distribution function ($F_A$);
      ○ calculating the standard deviation ($\sigma_A$) of the reference function ($F_A$);
      ○ determining a filtering threshold, designated reference threshold ($S_A$), from the calculated standard deviation of the reference function ($F_A$).

2. Method for generating a biomarker according to claim 1, **characterized in that** the acquisition is parameterized and comprises:

   ▪ an acquisition of an image recomposed of a plurality of images acquired over a number of cycle(s) of at least 4 echo times (TE), the echo times being configured according to increasing durations;
   ▪ a spin echo sequence;
   ▪ a parameterization aiming to emit a signal to pre-saturate or to saturate the acquired signal.

3. Method for generating a biomarker according to any of claims 1 to 2, **characterized in that** a second acquisition ($ACQ_2$) of the image is made with a first configuration ($Conf_1$) tooutline the lung volume ($V_P$), the first configuration ($CONF_1$) defining a parameterization of a $T_1$ or proton density weighted acquisition, a step of image processing being carried out to combine the image acquired with $T_2$ weighting with the image acquired by the second acquisition ($ACQ_2$).

4. Method for generating a biomarker according to claim 3, **characterized in that** a merger operation between at least one image acquired with $T_1$ weighting with an ultra-short echo time UTE and at least one image acquired with $T_2$ weighting is made to generate an image of which the data coming from each of the acquired images have been combined to segment the lung volume.

5. Method for generating a biomarker according to any of claims 1 to 3, **characterized in that** the reference threshold ($S_A$) is established from a combination between a reference distribution value of the reference function ($F_A$) and a value comprised between 10 and 20 times the value of the standard deviation ($б_A$) of the reference function ($F_A$).

6. Method for generating a biomarker according to claim 5, **characterized in that** the reference distribution value of the reference function ($F_A$) is the main mode ($M_B$) of the distribution of the signal intensity values of the image acquired with $T_2$ weighting within the lung volume ($V_P$).

7. Method for generating a biomarker according to any of claims 1 to 6, **characterized in that** the method comprises a step of normalization, the normalization comprising the calculation of a volume intensity product (VIP) of the signal from the absolute values of the signal of the filtered volume ($V_F$), the volume resulting from the filtered volume ($V_F$) and the lung volume ($V_P$).

8. Method for generating a biomarker comprising:

   ▪ acquiring (ACQ) an image using an MRI system;
   ▪ processing said MRI image to generate (GEN 3D) a three-dimensional image of the lung;
   ▪ generating (GEN $F_1$) a first function ($F_1$) corresponding to the distribution of the different signal intensity values of each voxel of a portion of the acquired three-dimensional image;
   ▪ automatically calculating (DET_S) at least one filtering threshold ($S_A$, $S_1$, $S_2$) of said first function ($F_1$) from at least one second different signal intensity value distribution function ($F_2$, $F_A$, $Fg_1$, $F_{g2}$) of each voxel of a portion of the acquired three-dimensional image;
   ▪ segmenting (SEG) a volume comprising:

      ○ A main volume ($V_P$), corresponding to the lung volume;
      ○ A filtered volume ($V_F$) of a volume of voxels quantified by the first function ($F_1$) and filtered by means of at least the calculated filtering threshold ($S_A$, $S_1$),

wherein
   ▪ the acquisition (ACQ) of a three-dimensional image using an MRI system, is configured by:

      ○ a proton density (long TR or long TE) or $T_1$ weighting, the echo time (TE) (short TR, short TE )
      ○ an echo time less than a predefined threshold;

   ▪ the automatic calculation of at least one filtering threshold ($S_1$, $S_2$) comprises:

      ○ modeling (MODEL) at least two gaussian functions ($Fg_1$, $Fg_2$) by adjustment of the first function ($F_1$);
      ○ determining the filtering threshold, called first threshold, by a calculation of the intersection of the first gaussian function ($Fg_1$) and the second gaussian function ($Fg_2$);
      ○ determining a second threshold ($S_2$) corresponding to a minimum value of the first gaussian function ($Fg_1$) and a minimum value of a signal intensity value of a voxel;

   ▪ the filtered volume ($V_F$) is a first volume ($V_1$) corresponding to the voxels quantified ($Q_1$) by the first gaussian function ($Fg_1$) comprised between the first threshold ($S_1$) and the second threshold ($S_2$), said voxels corresponding to an air medium,
   ▪ normalizing the values of the three-dimensional image of the lung volume ($V_P$) from the first threshold ($S_1$) and the second threshold ($S_2$) calculated ($S_1$, $S_2$);
   ▪ generating a first biomarker ($B_{IND1}$) indicating a ratio of a characteristic volume (Vc) of the normalized segmented volume, said ratio being calculated between the characteristic volume (Vc) and the lung volume ($V_F$),

**characterized in that** the acquisition being a 4D acquisition configured to acquire over a predefined duration a variation in the first biomarker per time unit.

9. Method for generating a biomarker according to any of claims 1 to 8, **characterized in that** the method comprises the acquisition (ACQ) of the signal intensity values of each voxel quantified by the first function ($F_1$), the intensity values corresponding to an image contrast datum.

10. Method for generating a biomarker according to any of claims 1 to 8, **characterized in that** the acquisition (ACQ) is carried out in a synchronized manner with a respirator, the respirator being a navigator or a respiratory belt.

11. Method for generating a biomarker ($B_{IND}$) according to any of claims 1 to 10, **characterized in that** a step of extracting a volume image is carried out from the images acquired by MRI, said extracted image being realized at a determined instant of the sequence.

12. Method for generating a biomarker ($B_{IND}$) according to any of claims 1 to 11, **characterized in that** the acquisition (ACQ) of the three-dimensional image is made by means of a stack of acquired 2D images, the thickness of the section being equal at least to the width of a voxel.

13. Method for generating a biomarker according to claim 8, **characterized in that** the 4D acquisition is configured to acquire a volume of voxels over a time unit corresponding to a duration of a respiratory cycle, said acquisition being synchronized with a datum characteristic of an inspiration and/or an expiration.

14. System comprising at least a calculator and a memory and an interface for receiving an image acquired by an MRI system, said system being configured to implement the steps of the method of any of claims 1 to 13.

FIG.1

FIG.2

FIG.3

FIG.4

FIG.5

FIG.6A

FIG.6B

FIG.7A

FIG.7B

FIG.8

EP 4 004 866 B1

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BENLALA**. Automated Volumetric Quantification of Emphysema Severity by Using Ultrashort Echo time MRI : Validation in Participants With Chronic Obstructive Pulmonary Disease. *Radiology*, 2019

- **JOSEPH YAZBEK**. *IRM pulmonaire 3D à temps d'écho ultracourt par acquisition spiralée ou sphérique de l'espace-k*